(19) Europäisches Patentamt
European Patent Office
Office européen des brevets

(11) Veröffentlichungsnummer: **0 037 985**
**B1**

(12) # EUROPÄISCHE PATENTSCHRIFT

(45) Veröffentlichungstag der Patentschrift: **15.06.83**

(51) Int. Cl.³: **G 03 C 5/54,** C 09 B 29/00, C 09 B 43/00

(21) Anmeldenummer: **81102517.0**

(22) Anmeldetag: **03.04.81**

(54) **Fotografisches Aufzeichnungsmaterial und hierfür geeignete Verbindungen mit fotografisch wirksamem, abspaltbarem Rest.**

(30) Priorität: **16.04.80 DE 3014669**

(43) Veröffentlichungstag der Anmeldung: **21.10.81 Patentblatt 81/42**

(45) Bekanntmachung des Hinweises auf die Patenterteilung: **15.06.83 Patentblatt 83/24**

(84) Benannte Vertragsstaaten: **BE CH DE FR GB IT LI**

(56) Entgegenhaltungen:
**EP-A-0 004 399**
**DE-A-2 809 716**
**DE-A-2 809 857**
**DE-B-1 047 620**

(73) Patentinhaber: **AGFA-GEVAERT Aktiengesellschaft, D-5090 Leverkusen 1 (DE)**

(72) Erfinder: **Renner, Günter, Dr., Wagner Strasse 50, D-5060 Berg. Gladbach 2 (DE)**
Erfinder: **Wolff, Erich, Dr., Balkhauser Weg 6, D-5650 Solingen (DE)**

**EP 0 037 985 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Fotografisches Aufzeichnungsmaterial und hierfür geeignete Verbindungen mit fotografisch wirksamem, abspaltbarem Rest

Die Erfindung betrifft ein fotografisches Aufzeichnungsmaterial für die Herstellung fotografischer Bilder nach dem Diffusionsübertragungsverfahren sowie neue Verbindungen, die einen fotografisch wirksamen Rest in Freiheit setzen können. Der fotografisch wirksame Rest kann ein Farbstoff oder ein Farbstoffvorläufer sein.

Unter den bisher bekanntgewordenen Verfahren zur Herstellung farbiger fotografischer Bilder nach dem Farbdiffusionsübertragungsverfahren gewinnen in jüngster Zeit zunehmend solche an Bedeutung, die auf der Verwendung diffusionsfest eingelagerter farbgebender Verbindungen beruhen, aus denen bei der Entwicklung diffundierende Farbstoffe oder Farbstoffvorläuferprodukte bildmäßig abgespalten und auf eine Bildempfangsschicht übertragen werden.

Zu den hierfür geeigneten, farbgebenden Verbindungen sind beispielsweise die in der DE-C-1 095 115 beschriebenen nicht-diffundierenden Farbkuppler zu zählen, die bei Entwicklung als Folge einer Reaktion mit dem Oxidationsprodukt einer aus einem primären aromatischen Amin bestehenden Farbentwicklerverbindung einen vorgebildeten oder bei der Farbkupplung erzeugten Farbstoff in diffundierender Form in Freiheit setzen. Die Auswahl der benötigten Entwicklerverbindung beschränkt sich hierbei naturgemäß auf Farbentwickler.

Weiterhin ist hierbei auf die in der DE-A-1 930 215 beschriebenen nicht-diffundierenden farbgebenden Verbindungen hinzuweisen, die über eine spaltbare Hydrazongruppierung einen vorgebildeten latent diffusionsfähigen Farbstoffrest mit einem diffusionsfest machenden Rest verknüpft enthalten. Diese Verbindungen sind nicht als Farbkuppler zu bezeichnen, und es hat sich auch erwiesen, daß die Auswahl der Entwicklerverbindungen, die zur Freisetzung des diffundierenden Farbstoffrestes erforderlich sind, keineswegs auf die üblichen Farbentwickler beschränkt ist, sondern daß auch Schwarz-Weiß-Entwickler, z. B. Brenzkatechine, sehr gut brauchbar sind.

In der DE-A-1 772 929 sind ferner nicht-diffundierende farbige Verbindungen mit einer besonderen Gruppierung beschrieben, die bei der Entwicklung eine oxidative Ringschlußreaktion eingehen und hierbei einen vorgebildeten Farbstoffrest in diffundierender Form in Freiheit setzen. Die dort vorgestellten Verbindungen lassen sich in zwei Gruppen einteilen. Die Verbindungen der einen Gruppe benötigen zur Entwicklung eine übliche Farbentwicklerverbindung, mit deren Oxidationsprodukt sie kuppeln und in einer nachfolgenden Ringschlußreaktion den vorgebildeten Farbstoffrest in diffundierender Form in Freiheit setzen. Die Verbindungen der anderen Gruppe stellen selbst Silberhalogenidentwicklungsmittel dar und vermögen daher auch in Abwesenheit weiterer Entwicklerverbindungen in der oxidierten Form die vorerwähnte Ringschlußreaktion unter Freisetzung der diffundierenden Farbstoffe einzugehen.

Schließlich seien an dieser Stelle noch erwähnt die nicht-diffundierenden farbgebenden Verbindungen der DE-A-2 242 762. Hierbei handelt es sich um Sulfonamidophenole und Sulfonamidoaniline, die nach der bei der Entwicklung erfolgten Oxidation unter dem Einfluß des Entwickleralkalis unter Freisetzung diffundierender Farbstoffe mit einer freien Sulfamoylgruppe gespalten werden.

Die obenerwähnten farbgebenden Verbindungen arbeiten ausnahmslos negativ, d. h. die bildmäßige Verteilung des freigesetzten diffundierenden Farbstoffes entsteht bei Verwendung üblicher (negativ arbeitender) Silberhalogenidemulsionen in Übereinstimmung mit dem bei der Entwicklung erzeugten negativen Silberbild. Zur Erzeugung positiver Farbstoffbilder bedarf es daher der Verwendung von direktpositiven Silberhalogenidemulsionen oder andernfalls der Anwendung eines geeigneten Umkehrverfahrens.

Aus den DE-A-2 402 900, 2 543 902, 2 823 159 sowie den US-A-3 980 479, 4 108 850 und den GB-A-1 464 105 und 1 464 104 sind weiterhin nicht-diffundierende oxidierbare farbgebende Verbindungen bekannt, die in reduzierter Form zu einer Spaltungsreaktion unter alkalischen Entwicklungsbedingungen befähigt sind, wobei ein diffundierender Farbstoff in Freiheit gesetzt wird, und bei denen andererseits in oxidierter Form die obenerwähnte Spaltungsreaktion erschwert oder verhindert wird. Derartige Verbindungen sind in Kombination mit herkömmlichen Negativemulsionen zur Herstellung positiver Übertragungsfarbbilder geeignet.

Es ist vorteilhaft derartige Verbindungen nicht in der reduzierten alkalilabilen Form, sondern in der entsprechenden oxidierten Vorläuferform einzusetzen, die gegen Alkali unempfindlich ist. Solche Verbindungen sind beschrieben in DE-A-2 809 716 und DE-A-2 809 857; sie enthalten eine Elektronen akzeptierende nukleophile Vorläufergruppe, die reduziert werden muß, um eine intramolekulare nukleophile Verdrängungsreaktion eingehen zu können unter Freisetzung eines fotografisch wirksamen Restes. In der veröffentlichten europäischen Patentanmeldung 4 399 sind reduzierbare Verbindungen beschrieben mit einer Elektronen akzeptierenden Gruppe, die reduziert werden muß, um aus der reduzierbaren Verbindung einen fotografisch wirksamen Rest in einer Eliminierungsreaktion freisetzen zu können.

Es wurde nun eine neue Klasse von nicht-diffundierenden Verbindungen gefunden, die reduzierbar sind und in reduzierter Form unter dem Einfluß des Entwickleralkali einer Spaltungsreaktion unterliegen unter Freisetzung einer fotografisch wirksamen Gruppe, insbesondere eines diffundierenden Farbstoffes, die aber der erwähnten Spaltungsreaktion nicht oder in nur viel geringerem Maße unterliegen, wenn sie nicht reduziert sind. Die Verbindungen der vorliegenden Erfindung weisen eine reduzierbare Gruppe auf und eine weitere Gruppe, die durch Reduktion der ersten Gruppe in einen aktiven Zustand überführt (aktiviert) werden kann, so daß sie eine intramolekulare nukleophile Verdrängungsreaktion oder eine 1,4- oder 1,6-Eliminierungsreaktion eingeht, wobei aus der (reduzierten Form der) erfindungsgemäßen reduzierbaren Verbindung ein fotografisch wirksamer Rest freigesetzt wird.

Gegenstand der vorliegenden Erfindung ist ein fotografisches Aufzeichungsmaterial mit mindestens einer lichtempfindlichen Silberhalogenidemulsionsschicht und einer dieser zugeordneten nicht-diffundierenden Verbindung, die in reduzierter Form unter den Bedingungen der alkalischen Entwicklung einer Spaltungsreaktion unterliegt unter Freisetzung einer fotografisch wirksamen Gruppe, z. B. eines diffundierenden Farbstoffes, und die in nicht reduzierter Form der erwähnten Spaltungsreaktion nicht oder nur in viel geringerem Maße unterliegt als in reduzierter Form. Falls es sich bei der fotografisch wirksamen Gruppe um einen diffundierenden Farbstoff handelt, kann dieser auf eine Bildempfangsschicht übertragen werden. Im letzteren Fall werden die nicht-diffundierenden Verbindungen im folgenden als farbgebende Verbindungen bezeichnet.

Die erfindungsgemäßen Verbindungen entsprechen folgender Formel I:

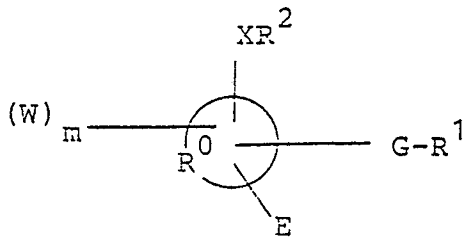

I

,

worin die Substituenten W, $XR^2$, $G-R^1$ und E in beliebiger Stellung zueinander angeordnet sein können und worin bedeuten:

$R^0$ einen Rest zur Vervollständigung eines Ringsystems mit mindestens einem aromatischen oder heteroaromatischen Ring, der gegebenenfalls weitere Ringe als Substituenten oder in ankondensierter Form enthalten kann;
W eine Gruppe, die die Elektronendichte in dem Substituenten E vermindert;
m eine ganze Zahl von 1 bis 3;
G eine Gruppe, an der unter den Bedingungen der fotografischen Entwicklung eine Abspaltung von $R^1$ erfolgen kann;
$R^1$ einen Rest einer diffusionsfähigen fotografisch wirksamen Verbindung;
X ein Sauerstoffatom, ein Schwefelatom, eine gegebenenfalls substituierte Iminogruppe;
$R^2$ H oder bevorzugt eine im alkalischen Milieu abspaltbare Gruppe;
E eine zur Aufnahme von Elektronen befähigte Gruppe;

wobei gilt, daß die Verbindung I mindestens einen diffusionsfest machenden Rest aufweist.

In einer bevorzugten Ausführungsform bedeuten in der Formel (I):

$R^0$ die Atome zur Vervollständigung eines 5- oder 6gliedrigen aromatischen oder heteroaromatischen Ringes, an den weitere Ringe ankondensiert sein können;
W ein Halogenatom wie Fluor, Chlor, Brom oder Jod, oder eine Cyan-, Nitro-, Nitroso-, Trifluormethyl-, quaternäre Ammonium- oder Acylgruppe;
m ganze Zahl von 1 bis 3;
$R^2$ H oder bevorzugt eine Acylgruppe;
X ein Sauerstoffatom, Schwefelatom oder eine Gruppe $-NR^3-$;
E eine der folgenden Gruppen:

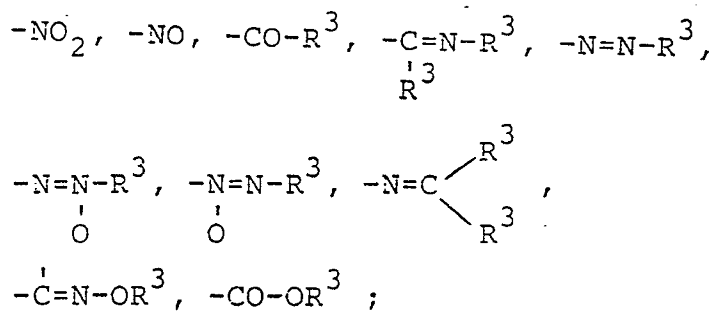

$R^3$ Wasserstoff, Alkyl, insbesondere mit 1–18 C-Atomen, Aryl, insbesondere Phenyl, eine heterocyclische Gruppe, insbesondere eine N-haltige, vorzugsweise 5- oder 6gliedrige heterocyclische Gruppe, Aralkyl, insbesondere Benzyl, wobei diese Reste mit üblichen Substituenten substituiert sein können, z. B. mit OH; mehrere in der gleichen Verbindung vorliegende Reste $R^3$ können gleich oder verschieden sein.

Eine durch W oder $R^2$ dargestellte Acylgruppe leitet sich insbesondere ab von aliphatischen oder aromatischen Carbon-, Sulfin- oder Sulfonsäuren, oder von Kohlensäure oder Kohlensäurehalbestern, oder von Carbamin- oder Sulfaminsäure; letztere können am Stickstoffatom ein- oder zweifach substituiert sein durch Alkyl, Aryl oder heterocyclische Gruppen. Beispiele sind Alkylsulfonylgruppen, N-Alkylsulfamoylgruppen und N-Alkylcarbamoylgruppen. Eine durch $R^2$ dargestellte Acylgruppe ist eine solche, die unter den alkalischen Entwicklungsbedingungen leicht abhydrolysiert werden kann, so daß die Gruppe $-XH$ bzw. $-X^{\ominus}$ in freier Form für die nachfolgende intramolekulare nukleophile Verdrängungsreaktion, 1,4- oder 1,6-Eliminierungsreaktion oder anderweite Abspaltreaktion zur Verfügung steht. Beispiele für solche abhydrolysierbare Acylgruppen sind bevorzugt von Carbonsäuren oder Kohlensäurehalbestern abgeleitete Acylgruppen, insbesondere die Acetylgruppe, die Chlor-, Dichlor- oder Trichloracetylgruppe, die Trifluoracetylgruppe, die Pyruvylgruppe, die Toluylgruppe, die p-Methoxybenzoylgruppe und die Ethoxycarbonylgruppe.

In einer besonders bevorzugten Ausführungsform der Erfindung bedeutet in der Formel (I) die Gruppe

$$-G-R^1:$$

a) die Gruppe $-CR^{11}R^{12}-R^1$, worin bedeuten

- $R^{11}$ einen gegebenenfalls substituierten Kohlenwasserstoffrest, z. B. Alkyl mit bis zu 18 C-Atomen, wie Methyl, Ethyl, n-Hexyl, n-Octyl, n-Undecyl, n-Dodecyl, n-Tridecyl, n-Heptadecyl, Aralkyl wie Benzyl oder Aryl wie Phenyl;
- $R^{12}$ Wasserstoff oder einen gegebenenfalls substituierten Kohlenwasserstoffrest, z. B. Alkyl mit bis zu 18 C-Atomen, wie Methyl, Ethyl, n-Hexyl, n-Octyl, n-Undecyl, n-Dodecyl, n-Tridecyl, n-Heptadecyl, Aralkyl wie Benzyl oder Aryl wie Phenyl;
- $R^1$ die Gruppe $-Z^1-(Y)_n-A$;
- $Z^1$ $-SO_2-$ oder $-S-$;
- A einen fotografisch wirksamen Rest;
- Y ein bivalentes Bindeglied der Formel $-R^{13}-(L)_p-(R^{14})_q-$, worin $R^{13}$ und $R^{14}$ einen Alkylrest mit 1 bis 6 C-Atomen oder einen gegebenenfalls substituierten Arylen- oder Aralkylenrest bedeutet und wobei die beiden Reste $R^{13}$ und $R^{14}$ die gleiche oder eine verschiedene Bedeutung haben können;
- L $-O-$, $-CO-$, $-CONR^{15}$, $-SO_2-NR^{15}-$, $-O-CO-NR^{15}-$, $-S-$, $-SO-$ oder $-SO_2-$ bedeutet ($R^{15}$ = Wasserstoff oder Alkyl);
- p 0 oder 1;
- q 0 oder 1;
- n 0 oder 1.

b) die Gruppe $-NR^4-CO-R^1$, worin

- $R^4$ die unter $R^{12}$ angegebene Bedeutung hat und worin bedeuten
- $R^1$ $Z^2-(Y)_n-A$,
- $Z^2$ ein Sauerstoffatom, Schwefelatom oder eine Gruppe $-NR^{16}-$;
- $R^{16}$ Wasserstoffatom oder Alkyl, insbesondere mit 1 bis 18 C-Atomen; und worin
- Y, n und A die unter a) angegebene Bedeutung haben.

c) die Gruppe

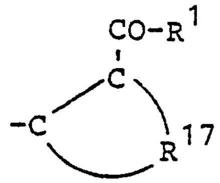

die sich vorzugsweise benachbart zu der Gruppe $-XR^2$, z. B. in ortho- oder peri-Stellung hierzu befindet und in der

$R^{17}$ ein Rest zur Vervollständigung eines gegebenenfalls substituierten aromatischen oder heteroaromatischen Ringes ist, an den gegebenenfalls weitere Ringe kondensiert sein

können, insbesondere ein Rest zur Vervollständigung eines aromatischen Carbocyclus mit 6 bis 10 C-Atomen, speziell Phenyl oder Naphthyl

und worin $R^1$ die unter b) angegebene Bedeutung hat.

In einer ganz besonders bevorzugten Ausführungsform bedeuten

$R^0$ Atome, die zur Vervollständigung eines carbocyclischen Ringsystems, beispielsweise eines Benzolringes oder eines Naphthalinringes, erforderlich sind;
W $-SO_2R$, $-NO_2$, $-N=O$, $-CO-R$, $-SO_2-NR_2$, worin R bedeutet H, Alkyl, Aryl;
X ein Sauerstoffatom;
$R^2$ eine Benzoylgruppe oder eine aliphatische Acylgruppe mit 1 bis 18 C-Atomen, oder eine Alkoxycarbonyl- oder Aroxycarbonyl-Gruppe mit 1 bis 18 C-Atomen;
E $-NO_2$ oder $-N=O$.

Der Substituent E ist bevorzugt so angeordnet, daß sich durch seine Reduktion eine optimale Aktivierung der Gruppe $-XR^2$ ergibt; wenn beispielsweise $R^0$ den Rest zur Vervollständigung eines 6gliedrigen Ringes bedeutet, befindet sich E bevorzugt in o- oder p-Stellung zu $-XR^2$. Falls $R^2$ ein Acylrest ist, ist seine Hydrolyse erschwert, solange E in der nicht reduzierten Form vorliegt. Durch Reduktion von E ergibt sich eine deutliche Beschleunigung der hydrolytischen Abspaltung des Acylrestes $R^2$, sofern sich X $R^2$ in o-Stellung zu E befindet.

Der Substituent W ist bevorzugt so angeordnet, daß er die Elektronendichte in der Position des Substituenten E verringert; wenn $R^0$ den Rest zur Vervollständigung eines 6gliedrigen Ringes bedeutet, befindet sich W bevorzugt in o- oder p-Stellung zu E.

Der Rest A bedeutet einen fotografisch wirksamen Rest; fotografisch wirksame Reste sind beispielsweise Farbstoffe, Farbstoffvorprodukte, Kuppler, beispielsweise DIR-Kuppler, Maskenkuppler, Weißkuppler, weiterhin Stabilisatoren, Entwicklungsinhibitoren und Bleichbeschleuniger.

Da die erfindungsgemäßen Verbindungen besonders geeignet für die Herstellung fotografischer Farbbilder sind, sind solche Verbindungen bevorzugt, in denen A einen farbstoffbildenden Rest bedeutet. In diesem Falle kann A einen fertigen vorgebildeten Farbstoff darstellen oder ein Farbstoffvorläuferprodukt.

Als Reste sind grundsätzlich die Reste von Farbstoffen aller Farbstoffklassen geeignet, soweit sie genügend diffusionsfähig sind, um durch die Schichten des lichtempfindlichen Materials hindurch in die Bildempfangsschicht diffundieren zu können. Zu diesem Zweck können die Farbstoffreste mit einer oder mehreren wasserlöslichmachenden Gruppen versehen sein. Als wasserlöslichmachende Gruppen sind unter anderem geeignet Carboxylgruppen, Sulfogruppen, Sulfonamidgruppen sowie aliphatische oder aromatische Hydroxylgruppen. Die in einigen Fällen, z. B. wenn $Z^1$ die Gruppe $-SO_2-$ bedeutet, nach der Spaltung bei dem Farbstoff verbleibende Sulfinsäuregruppe vermag dem Farbstoffmolekül bereits eine beträchtliche Diffusionsneigung im alkalischen Medium zu verleihen, so daß in diesen Fällen die Anwesenheit zusätzlicher wasserlöslichmachender Gruppen nicht unbedingt erforderlich ist. An Farbstoffen, die für das erfindungsgemäße Verfahren besonders geeignet sind, sind beispielsweise zu nennen: Azofarbstoffe, Azomethinfarbstoffe, Anthrachinonfarbstoffe, Phthalocyaninfarbstoffe, indigoide Farbstoffe, Triphenylmethanfarbstoffe, einschließlich solcher Farbstoffe, die mit Metallionen komplexiert oder komplexierbar sind.

Geeignete Farbstoffreste sind beispielsweise in DE-A-2 242 762, DE-A-2 505 248 und in Research Disclosure 15 654 (April 77) beschrieben. Ferner sei verwiesen auf die deutschen Offenlegungsschriften 2 626 821 und 2 756 656 für gelbe Bildfarbstoffe, 2 406 626, 2 406 627 und 2 503 443 für purpurfarbene Farbstoffe sowie 2 406 653, 2 462 010 und 2 607 440 für blaugrüne Bildfarbstoffe.

Geeignete metallisierbare Farbstoffe als fotografisch wirksame Reste für die erfindungsgemäßen nicht-diffundierenden reduzierbaren Verbindungen sind in den US-Patentschriften 4 165 238, 4 165 987, 4 183 754 und 4 183 755 beschrieben.

Unter den Resten von Farbstoffvorläuferprodukten sind die Reste solcher Verbindungen zu verstehen, die im Laufe der fotografischen Verarbeitung durch übliche oder zusätzliche Verarbeitungsschritte, sei es durch Oxidation, sei es durch Kupplung oder durch Freilegung einer auxochromen Gruppe in einem chromophoren System, beispielsweise durch Verseifung, in Farbstoffe übergeführt werden. Farbstoffvorprodukte in diesem Sinn können sein Leukofarbstoffe, Kuppler oder auch Farbstoffe, die im Lauf der Verarbeitung in andere Farbstoffe umgewandelt werden, z. B. sogenannte »verschobene Farbstoffe« (»shifted dyes«).

Unter sogenannten »verschobenen Farbstoffen« werden solche verstanden, bei denen sich die weitere Absorption hypsochrom oder bathochrom verschiebt, wenn die Farbstoffe einer Milieuänderung unterworfen werden, z. B. einer Änderung des pH-Wertes, oder chemisch verändert werden, z. B. durch Bildung von Metallkomplexen oder die Abspaltung eines Substituenten aus dem chromophoren System des Farbstoffes, wie in der US-A-3 260 597 beschrieben. Die »verschobenen Farbstoffe« sind deshalb vorteilhaft, weil ihre Absorptionsbereiche zunächst außerhalb des Bereiches der Lichtempfindlichkeit der zugehörigen Silberhalogenidemulsionen liegen, so daß keine

Erniedrigung der Lichtempfindlichkeit möglich ist. Erst im Laufe der Verarbeitung, z. B. in der Bildempfangsschicht, werden diese Farbstoffe durch die genannten Einwirkungsmöglichkeiten in solche überführt, die in dem gewünschten Absorptionsbereich der Bildfarbstoffe absorbieren.

Das bivalente Bindeglied Y, welches gegebenenfalls die Diffusionsgeschwindigkeit des Restes A steuert und die Abspaltgeschwindigkeit beeinflußt, kann insbesondere folgenden Formeln entsprechen:

$-CH_2-CH_2-O-CH_2-CH_2-$, 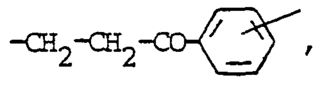, 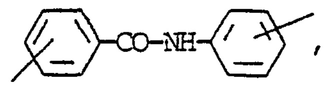,

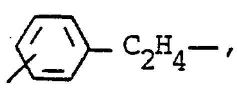, 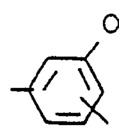, 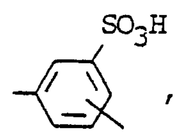, $-CH_2-CH_2-SO_2-C_6H_{12}-$,

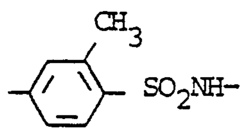 und $-C_3H_6-NH-CO-C_2H_4-$ sowie 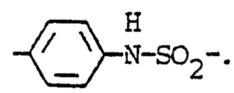.

Es ist darauf hinzuweisen, daß die erfindungsgemäßen farbgebenden Verbindungen als intakte Moleküle in den Schichten des fotografischen Materials nicht diffundieren sollen. Zu diesem Zweck enthalten sie einen diffusionsfest machenden Rest, z. B. in einem der genannten Substituenten oder in einem ankondensierten Ring.

Ausreichende Diffusionsfestigkeit der farbgebenden Verbindungen kann bereits selbst gegeben sein, wenn die genannten Substituenten keine längeren Alkylreste enthalten, da auch dann das Molekül je nach Farbstoffrest eine hinreichende Größe haben kann. Andernfalls besteht die Möglichkeit, die farbgebenden Verbindungen durch Auswahl von Resten geeigneter Größe diffusionsfest zu machen.

Als diffusionsfest machende Reste sind solche Reste anzusehen, die es ermöglichen, die erfindungsgemäßen Verbindungen in den üblicherweise bei fotografischen Materialien verwendeten hydrophilen Kolloiden diffusionsfest einzulagern. Hierzu sind vorzugsweise organische Reste geeignet, die im allgemeinen geradkettige oder verzweigte aliphatische Gruppen mit im allgemeinen 8 bis 20 C-Atomen sowie gegebenenfalls auch carbocyclische oder heterocyclische, gegebenenfalls aromatische Gruppen enthalten. Mit dem übrigen Molekülteil sind diese Reste entweder direkt oder indirekt, z. B. über eine der folgenden Gruppen verbunden: $-NHCO-$, $-NHSO_2-$, $-NR-$, wobei R Wasserstoff oder Alkyl bedeutet; $-O-$, $-S-$ oder $-SO_2-$. Zusätzlich kann der diffusionsfest machende Rest auch wasserlöslich machende Gruppen enthalten, wie z. B. Sulfogruppen oder Carboxylgruppen, die auch in anionischer Form vorliegen können. Da die Diffusionseigenschaften von der Molekülgröße der verwendeten Gesamtverbindung abhängen, genügt es in bestimmten Fällen, z. B. wenn das verwendete Gesamtmolekül groß genug ist, als »diffusionsfest machende Reste« auch kürzerkettige Reste zu verwenden.

Als besonders geeignete Verbindungen der allgemeinen Formel I haben sich Verbindungen mit den folgenden Strukturen II bis IV erwiesen:

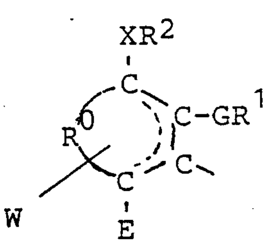 II 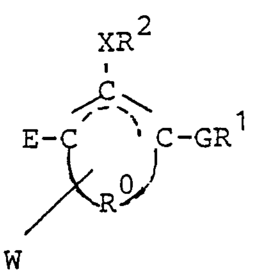 III 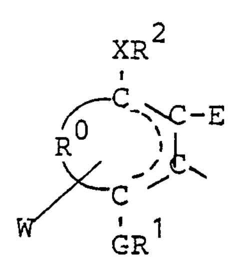 IV

In den Formeln II bis IV bedeutet $R^0$ den Rest zur Vervollständigung eines 6gliedrigen aromatischen Ringes, an den weitere Ringe ankondensiert sein können. Besonders bevorzugte Ringe sind der Benzol- und der Naphthalinring.

In einer noch weiter bevorzugten Ausführungsform entsprechen die reduzierbaren Verbindungen der vorliegenden Erfindung der Formel V

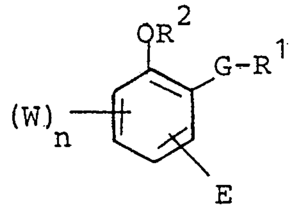

V

worin bedeuten

| | |
|---|---|
| $GR^1$ | $-CR^{11}R^{12}-Z^1-A$ oder $-NR^{12}-CO-Z^2-A$ |
| $R^{11}$ | einen Alkylrest mit bis zu 18 C-Atomen |
| $R^{12}$ | Wasserstoff oder einen Alkylrest mit bis zu 18 C-Atomen |
| $Z^1$ | $-SO_2-$ |
| $Z^2$ | $-O-$ |
| A | den Rest eines diffundierenden Farbstoffes |
| $R^2$ | einen von einer Carbonsäure oder einem Kohlensäurehalbester abgeleiteten Acylrest |
| E | eine Nitrogruppe in o- oder p-Stellung zu $-OR^2$ |
| W | eine Alkylsulfonylgruppe in o- oder p-Stellung zu E |
| n | 1 oder 2. |

Bevorzugte Verbindungen der allgemeinen Formel I seien im folgenden aufgeführt:

1.1

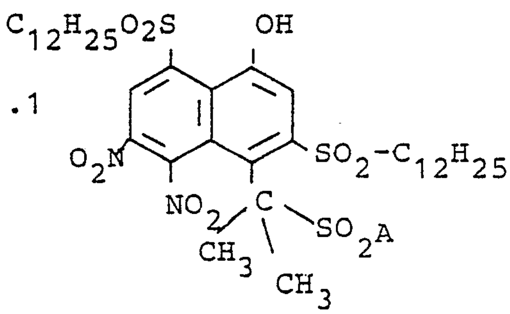

1.2

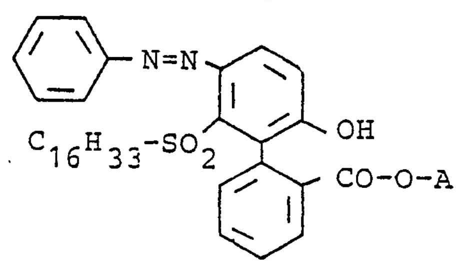

1.3

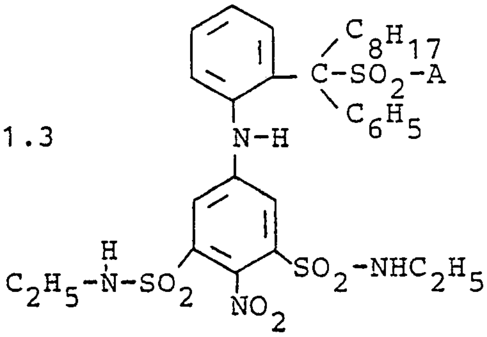

1.4

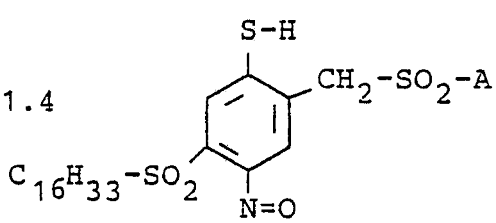

1.5

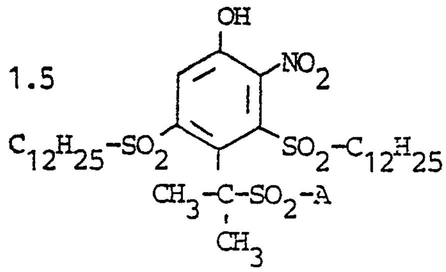

1.6

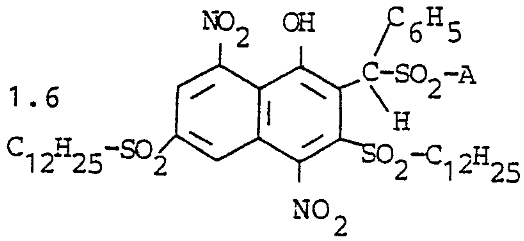

1.7

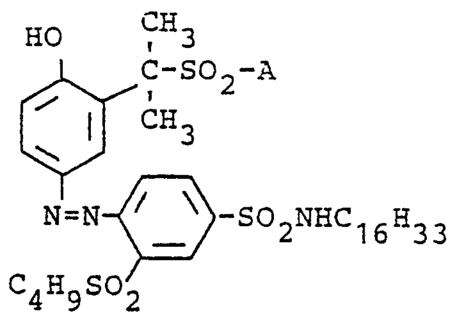

1.8

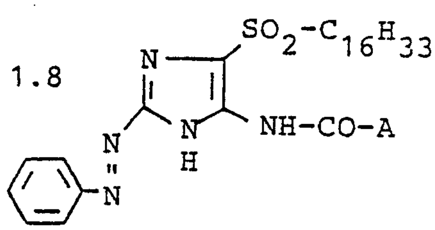

1.9

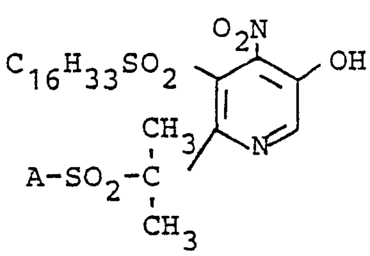

1.10

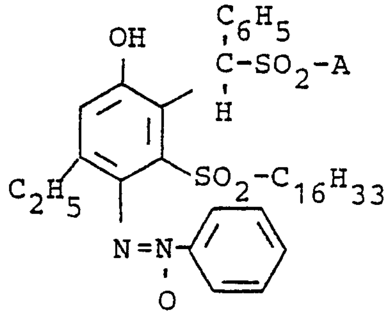

Ganz besonders bevorzugte Verbindungen sind folgende:

2.1

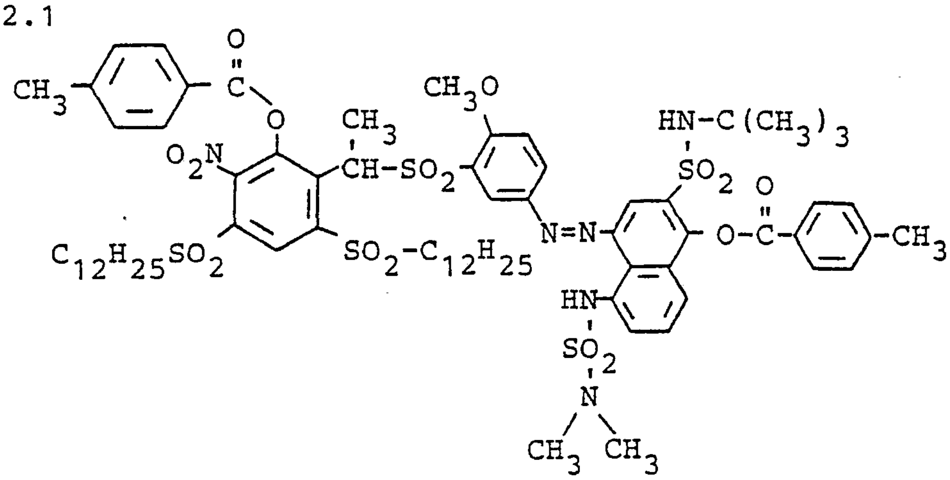

2.2

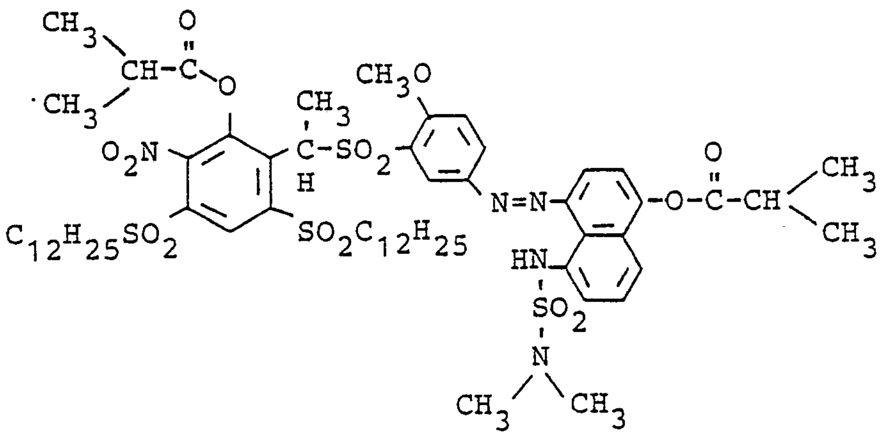

2.3

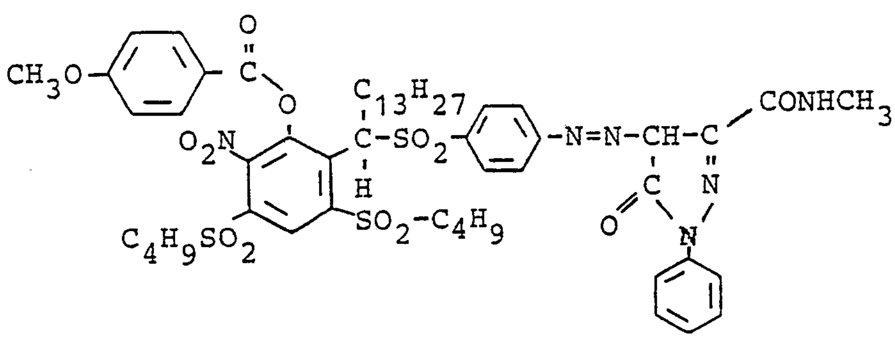

2.4

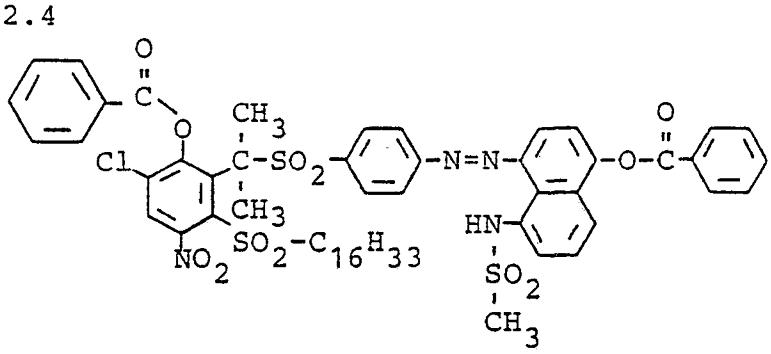

2.5

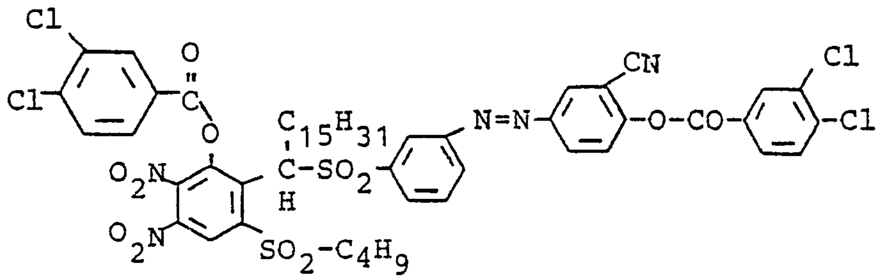

2.6

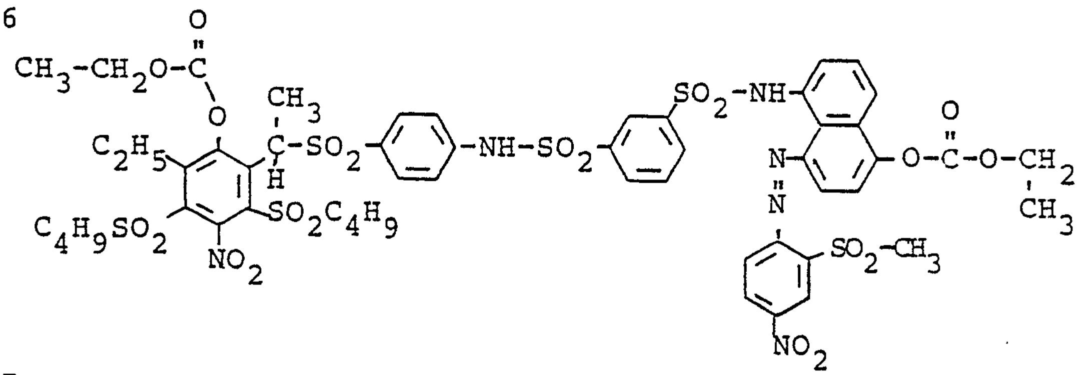

2.7

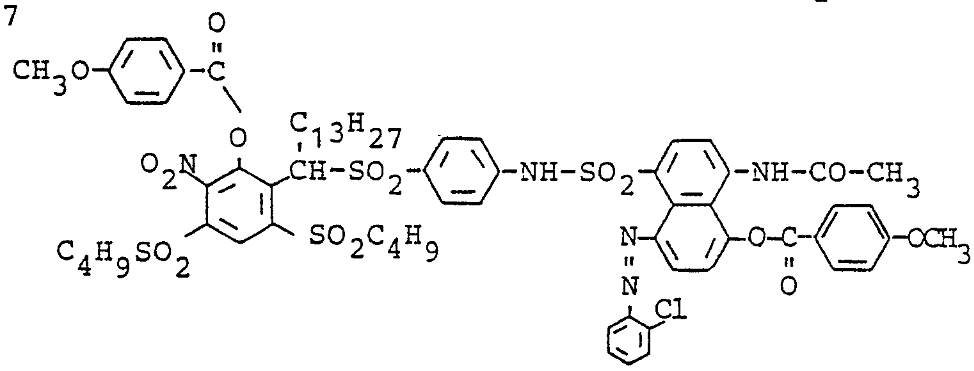

2.8

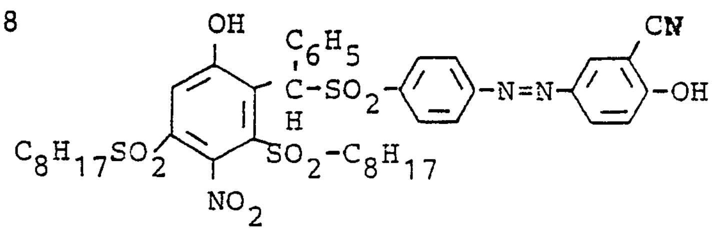

2.9

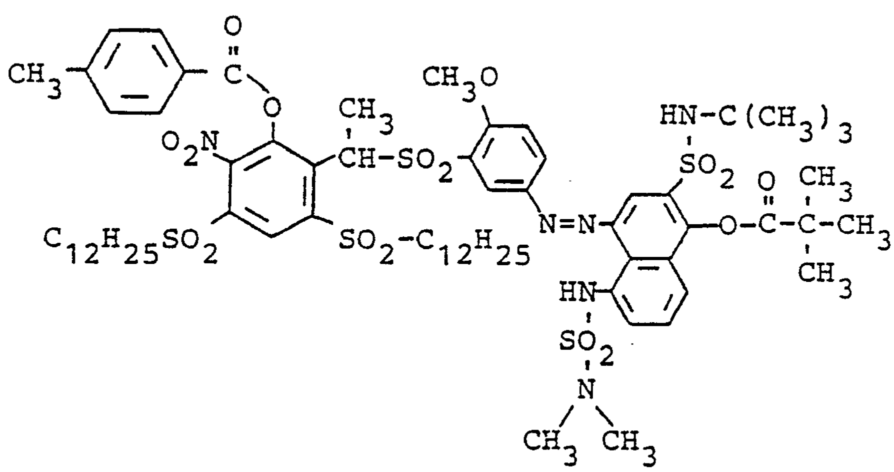

2.10

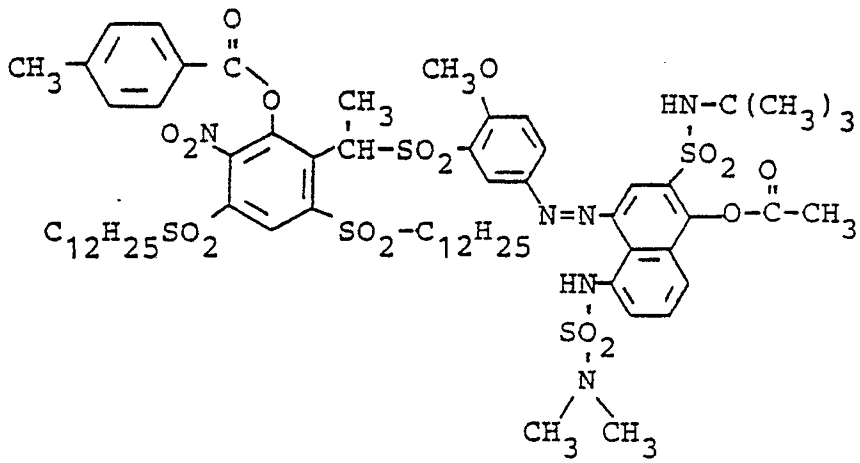

2.11

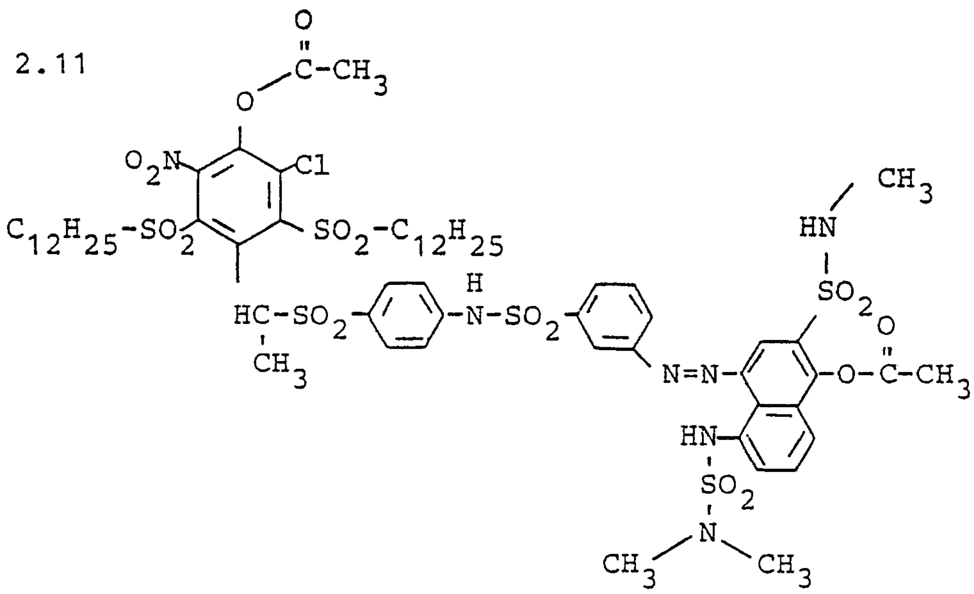

2.12

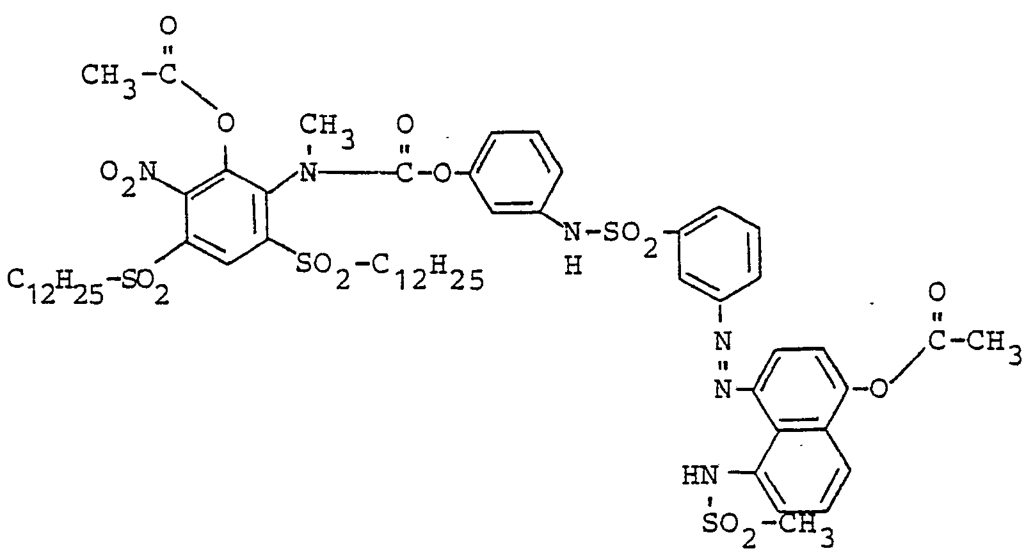

2.13

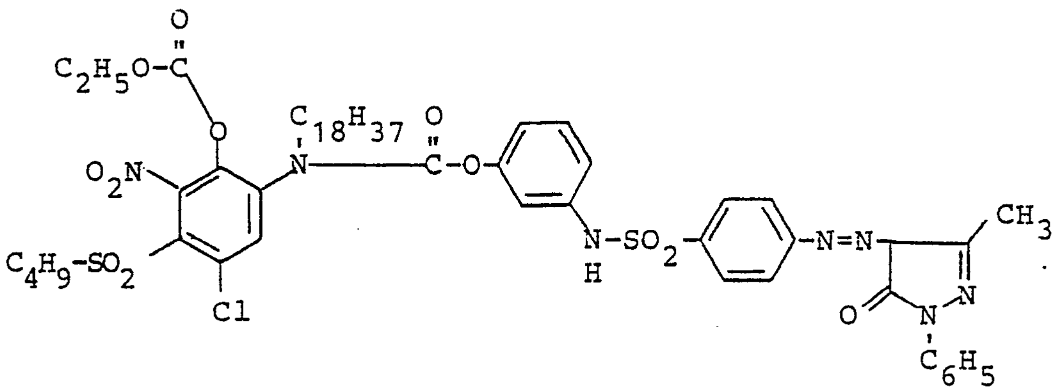

2.14

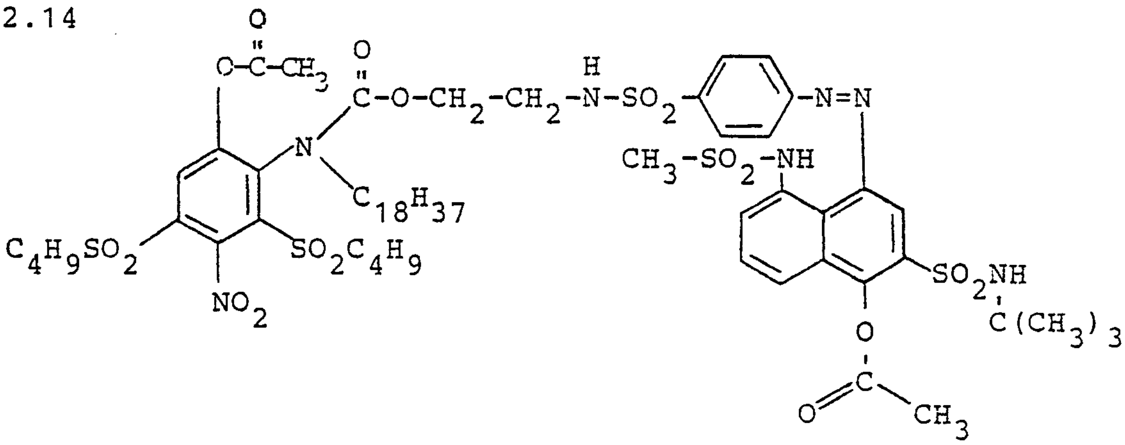

2.15

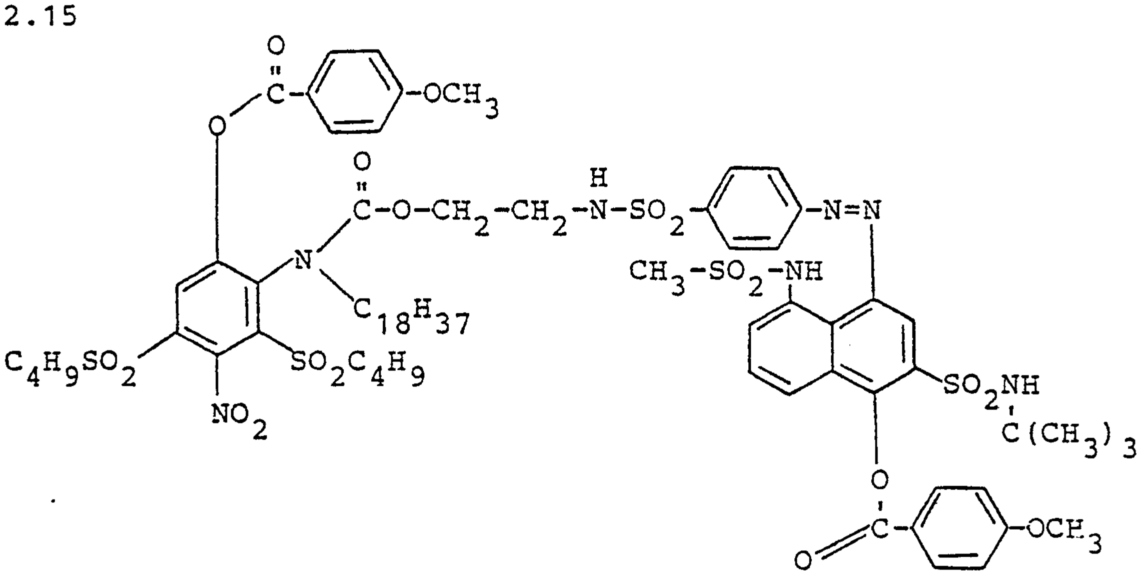

Die Verbindungen der Formel I können nach an sich bekannten Verfahren erhalten werden. Dabei kann ausgegangen werden von Chlorphenolen, die gemäß nachfolgendem Schema weiter verarbeitet werden.

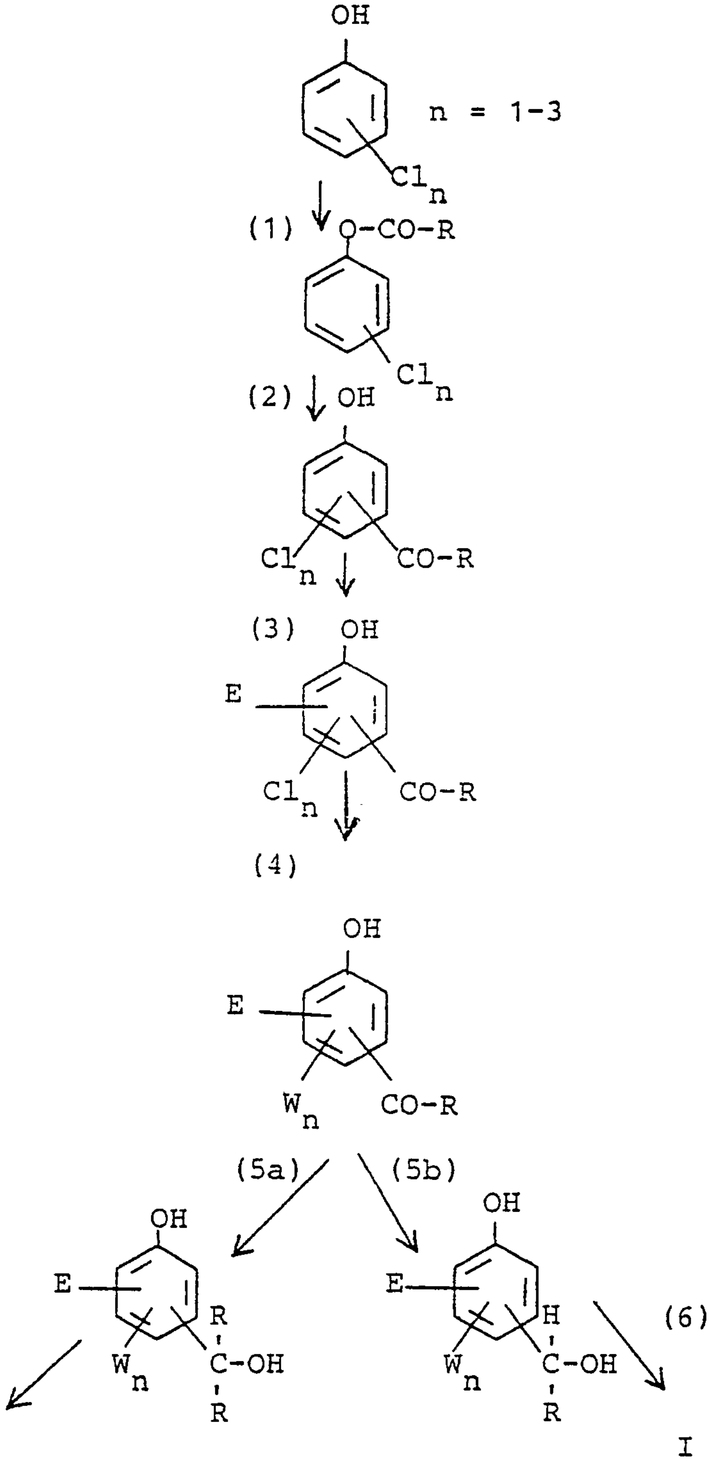


Die als Ausgangsmaterialien verwendeten Chlorphenole sind literaturbekannt. Die Acylierung (1) dieser Verbindungen verläuft nach üblicher Methodik mit einem Säurefänger in aprotischen Lösungsmitteln. Die eingeführte Acylgruppe kann gemäß (2) durch eine Fries-Verschiebung umgelagert werden (vgl. Org. Reactions, 1 [1942], 342–369). Die Einführung des Substituenten E (3) verläuft aus den aktivierten Aromaten in der Regel leicht (vgl. z. B. Houben-Weyl, Methoden der organischen Chemie, 4. Auflage, Band X/1, Seite 606; M. Krause: Berichte der Deutschen Chemischen Gesellschaft 32 [1899], 124). Die Einführung des Substituenten W (4) erfolgt durch Austausch des Halogenatoms durch z. B. ein Mercaptan und Oxidation des erhaltenen Thioethers mittels Wasserstoffperoxid.

Die Umsetzung gemäß (5a) ist bekannt aus dem Organikum, 1967, Seite 488, die Umsetzung gemäß (5b) aus JACS 73 (1951), 2857 und JACS 74 (1952), 3668. Der letzte Reaktionsschritt (6) zum Erhalt der erfindungsgemäßen Verbindungen ist bekannt aus Hinsberg, Ber. 50 (1917), 468 und Balfe, J. Chem. Soc. (1950), 3309, ebenso die u. U. vorteilhafte Acylierungsreaktion.

Beispielhaft seien die folgenden Herstellungen beschrieben:

Herstellung Verbindung 2.1:

2.1.a 81,5 g 3,5-Dichlorphenol werden in 250 ml Pyridin gelöst und bei Raumtemperatur mit 48 g Acetylchlorid zur Reaktion gebracht. Man gibt auf Eis/Salzsäure, saugt ab und wäscht nach. 1-Acetoxy-3,5-dichlorbenzol wird aus Methanol umgelöst. Fp.: 36° C.

2.1.b 50 g 1-Acetoxy-3,5-dichlorbenzol werden auf 120°C erwärmt. Man trägt portionsweise 45 g Aluminiumchlorid zu. Nach 2 Stunden wird mit Eis und wenig Salzsäure hydrolysiert. 2-Acetyl-3,5-dichlorphenol wird mit Methylenchlorid aufgenommen und abgetrennt. Die Lösung wird eingedampft und der Rückstand wird mit Wasserdampf destilliert. Das Produkt läßt sich aus Petrolether umlösen. Fp.: 48 – 49° C.

2.1.c 20,5 g 2-Acetyl-3,5-dichlorphenol werden bei – 10° C bis 0° C in 150 ml konz. $H_2SO_4$ gelöst und unter Kühlung langsam mit 11 g Kaliumnitrat versetzt. Danach läßt man auf Raumtemperatur kommen und fällt in Eiswasser. Das Produkt wird abgesaugt. Fp.: 62 – 64° C.

2.1.d 25 g 2-Acetyl-3,5-dichlor-6-nitrophenol werden in 75 ml Dimethylsulfoxid gelöst. Diese Lösung wird zu 60 g Dodecylmercaptan, 10 g Natriumhydrid (80%ig) und 250 ml Dimethylsulfoxid gegeben. Man rührt 3 Stunden bei 60 – 70° C. Dann wird in Wasser eingerührt. Die organische Phase wird mit Methylenchlorid aufgenommen, das Lösungsmittel wird abgedampft. Der Rückstand kann mit Petrolether gereinigt werden. Fp.: 75 – 77° C.

2.1.e 30 g des unter d) erhaltenen Bisthioethers werden in 250 ml Eisessig gelöst und mit 30 ml 30%igem Wasserstoffsuperoxid innerhalb von 3 Stunden oxidiert. Nach dem Abkühlen fällt das Produkt aus. Es kann mit Eisessig gewaschen werden. Fp.: 135 – 36° C.

2.1.f 32,5 g des unter e) erhaltenen Disulfons werden in 2000 ml iso-Propanol und 40 ml 10%iger Pottaschelösung bei 20 – 25° C mit 15 g Natriumborhydrid in 40 ml Wasser zusammengebracht. Man rührt bei Raumtemperatur 30 Stunden. Danach wird mit Essigsäure angesäuert und mit Essigester versetzt. Die Essigesterphase wurde gewaschen, getrocknet und eingedampft. Es wurde ein weißes Produkt (Fp.: 169 – 171° C) erhalten.

2.1.g 13 g des unter f) erhaltenen Carbinols wurden mit 12 g 2-(tert.-Butylsulfamido)-5-dimethylaminosulfamoyl-4-(4′-methoxy-3′-sulfino)-phenylazo-naphthol-1 bei 20° C in 200 ml Dimethylacetamid gelöst. Dazu wurden 8 g Dicyclohexylcarbodiimid gelöst in 40 ml Dimethylacetamid bei 20° C zugegeben. Man rührt 3 Stunden nach und saugt dann ab. Die Mutterlauge wird in schwach saurer Eis/Wasser-Mischung gefällt. Der Farbstoff wurde in Essigester aufgenommen, gewaschen, getrocknet und eingedampft. Der Rückstand wurde mit Petrolether gereinigt.
Die Verbindung besitzt keinen scharfen Schmelzpunkt mehr, sondern zersetzt sich bei 220 – 230° C.

2.1.h 12,3 g des unter g) erhaltenen roten Farbstoffes wurden in Aceton mit wenig Pyridin gelöst und mit 6 g 4-Methylbenzoesäurechlorid bei Raumtemperatur versetzt. Man rührt eine Stunde nach und arbeitet wäßrig auf.
Man erhält in guter Reinheit das zweifach acylierte, gelbe Produkt.

Herstellung der Verbindung 2.2.

4,1 g des unter Verbindung 2.1, Absatz g) beschriebenen roten Farbstoffes wurden in 40 ml Dimethylacetamid gelöst. Man gibt dazu 2,44 g Chlorameisensäureisopropylester, tropft 2 g Triethylamin zu und rührt 30 Minuten nach. Dann wird aufgearbeitet und die organische Phase eingeengt. Man nimmt mit wenig Essigester auf und fällt mit Petrolether den gelben Farbstoff 2.2 aus.

Herstellung der Verbindung 2.3:

2.3.a 81,5 g Dichlorphenol werden in 200 ml Aceton und 200 ml Pyridin gelöst. Bei 40° C tropft man innerhalb von 2 Stunden 123 g Myristinsäurechlorid zu. Man rührt 1 Stunde nach, gibt auf Eis/Salzsäure und saugt das ausgefallene Produkt ab.

2.3.b 30 g der Substanz 2.3.a werden bei 140° C langsam mit 20 g Aluminiumchlorid versetzt. Man rührt 3 Stunden und arbeitet dann mit Eis und wenig Salzsäure auf. Das Produkt wird mit Methylenchlorid aufgenommen, die organische Phase gewaschen und getrocknet. Das

Lösungsmittel wird abdestilliert. Der verbleibende Rückstand wird aus Methanol umgelöst.

2.3.c Man nitriert 37 g der Verbindung 2.3.b wie bei 2.1.c beschrieben mit 11 g Kaliumnitrat. Das erhaltene Produkt ist gelblich gefärbt und schmilzt bei 95—96°C.

2.3.d 21 g der Verbindung 2.3.c werden in 200 ml Dimethylsulfoxid gelöst. Diese Lösung tropft man langsam zu einer gerührten Suspension von 13,5 g Butylmercaptan und 4,5 g 80%igem Natriumhydrid in 100 ml Dimethylsulfoxid. Man rührt 4 Stunden bei 70—80°C und arbeitet danach wäßrig auf. Das Lösungsmittel wird im Vakuum abgezogen. Die Reinheit des verbleibenden Rückstandes ist für die folgende Oxidation ausreichend.

2.3.e Wie unter 2.1.e beschrieben wird 2.3.d oxidiert. Das erhaltene Disulfon wird aus Ethanol umgelöst. Fp.: 142—44°C.

2.3.f 12,4 g des Disulfons 2.3.e wurden in 300 ml iso-Propanol mit 4,5 g Aluminiumisopropylat zusammengegeben. Man erwärmt und destilliert innerhalb von 5 Stunden Aceton ab. Der Rückstand wurde mit Essigester und verdünnter Salzsäure versetzt. Man trennt ab und kristallisiert aus n-Propanol um.

2.3.g 6,2 g des Carbinols 2.3.f und 2 g 4-Methoxybenzoesäurechlorid wurden in Methylethylketon mit 1 g Pyridin umgesetzt. Man gießt auf Wasser und arbeitet mit Essigester auf. Die Reinheit des so erhaltenen Produktes ist ausreichend.

2.3.h 7,9 g der bei 2.3.g erhaltenen Verbindung werden in 150 ml Dioxan gelöst. Dazu gibt man 4,5 g 1-Phenyl-3-N-methylcarbamoyl-4-(4'-sulfino)-phenylazo-pyrazolon-5. Man rührt bei 40°C und gibt langsam insgesamt 2,5 g Dicyclohexylcarbodiimid zu. Man saugt nach 90 Minuten vom ausgefallenen Harnstoff ab, rührt die Mutterlauge in Wasser mit wenig Essigsäure ein und trennt die wäßrige Phase ab. Nach Waschen und Trocknen wird eingedampft. Der Rückstand wird mit Methanol gereinigt.

Analog der beschriebenen Methodik wurden die übrigen Verbindungen synthetisiert. Abweichend von diesen Reaktionen verliefen:

Verbindung 2.4:

Es wurde analog 2.1.a gearbeitet, nur, daß anstelle von 3,5-Dichlorphenol 2,5-Dichlorphenol eingesetzt wurde. Das daraus hergestellte Acetophenon wurde durch Grignard-Reaktion in das Dimethylphenylcarbinol überführt.

Verbindung 2.6:

2-Ethyl-3,5-dichlorphenol wurde durch Clemmensen-Reduktion aus 2.1.b erhalten. Diese Verbindung wurde dann erneut acyliert und einer Fries-Verschiebung unterworfen.

Die in der Formel I dargestellten Substituenten können sich in den verschiedensten Positionen befinden. Vorzugsweise jedoch befinden sie sich in Positionen, in denen sich durch intramolekulare Reaktion der Gruppe $XR^2$ mit G leicht ein organischer Ring oder ein vergleichsweise kurzlebiger organischer Ring bilden kann oder bei denen $XR^2$ zusammen mit der Gruppe $GR^1$ eine 1,4- oder 1,6-Eliminierung eingehen kann. Hierbei werden $R^2$ und $R^1$ abgespalten unter Ausbildung einer neuen $\pi$-Bindung und Verschiebung mindestens eines bereits vorhandenen $\pi$-Elektronenpaares. Diese Reaktion erfolgt dabei, nachdem der Rest E mindestens ein Elektron aufgenommen hat; die Geschwindigkeit dieser Reaktion ist vor der Reduktion der Gruppe E außerordentlich gering oder praktisch gleich Null.

Bei den erfindungsgemäßen neuen Verbindungen handelt es sich um solche, die unter Verarbeitungs- oder Entwicklungsbedingungen stabil sind, außer dann, wenn die Freisetzung einer Verbindung als direkte Funktion der Reduktion der Gruppe E erfolgt. Gegebenenfalls können die Verbindungen noch andere Gruppen aufweisen, die ionisieren oder hydrolysieren. Die primäre bildweise Freisetzung der fotografisch wirksamen Verbindung erfolgt jedoch durch die obenerwähnten Reaktionen, wobei die Gruppe, die durch Reduktion der Gruppe E erhalten worden ist, die Gruppe $XR^2$ so beeinflußt, daß die zur Abspaltung des fotografisch wirksamen Restes beschriebenen Reaktionen in Gang kommen. Werden die erfindungsgemäßen Verbindungen unter vergleichsweise stark alkalischen Bedingungen verwendet, so werden die verschiedenen Gruppen der Verbindungen derart ausgewählt, daß die Verbindungen gegenüber einem äußeren Angriff durch Alkali vergleichsweise stabil sind.

Die erfindungsgemäßen Verbindungen bieten gegenüber vergleichbaren bekannten Verbindungen des Standes der Technik mehrere Vorteile. Ein wesentlicher Vorteil der erfindungsgemäßen Verbindungen vor entsprechenden oxidierbaren Verbindungen besteht darin, daß sie Elektronen aufnehmen müssen, d. h. einer Reduktion unterliegen müssen, bevor die Freisetzung der fotografisch

wirksamen Verbindung erfolgen kann. Die erfindungsgemäßen Verbindungen sind dabei in den verschiedensten flüssigen Medien, wie beispielsweise alkalischen Medien, vergleichsweise stabil. Im Gegensatz hierzu müssen die bekannten Verbindungen oxidiert werden, bevor sie einem Freisetzungsmechanismus unterliegen oder sie hydrolysieren zwecks Freisetzung einer Verbindung als Funktion des pH-Wertes anstatt als Folge einer Reduktion. Im Vergleich mit entsprechenden bekannten reduzierbaren Verbindungen bieten die Verbindungen der vorliegenden Erfindung den Vorteil, daß in der die Abspaltung bewirkenden Reaktionskette neben der Reduktion der Gruppe E mit der hydrolytischen Spaltung der Gruppe $-XR^2$ unter Bildung der entsprechenden Gruppe $-XH$ bzw. $-X^{\ominus}$ eine weitere Teilreaktion zur Verfügung steht, die ablaufen muß, bevor die fotografisch wirksame Verbindung freigesetzt werden kann. Dies kann sich beispielsweise günstig auf das Schleierverhalten auswirken.

In vorteilhafter Weise werden die Verbindungen der Erfindung mit einer Elektronendonorverbindung (ED-Verbindung) umgesetzt, welche den Rest E reduziert unter Ausbildung einer Gruppe, die die Reaktivität der Gruppe $-XR^2$ zusammen mit $GR^1$ im Vergleich zur erfindungsgemäßen Ausgangsverbindung so erhöht, daß es zur Freisetzung von $R^1$ kommt. Die ED-Verbindung kann der erfindungsgemäßen Verbindung dabei beispielsweise durch Aufsprühen mittels einer Schablone, durch physikalische Übertragung, durch Aufsaugen oder durch bildweise Übertragung zugeführt werden.

Die erfindungsgemäßen Verbindungen werden vorzugsweise in Kombination mit geeigneten ED-Verbindungen in fotografischen Schichten verwendet, um durch reduktive Spaltung die diffusionsfähige, fotografisch wirksame Verbindung bildweise freizusetzen. Die ED-Verbindung wird dabei an den belichteten Stellen bildmäßig oxidiert und dadurch inaktiviert, bevor sie mit der erfindungsgemäßen Verbindung reagieren kann. Auf diese Weise wird die Bildumkehr bei der reduktiven Spaltung der erfindungsgemäßen Verbindung erreicht.

Unter einer ED-Verbindung wird allgemein eine solche Verbindung verstanden, die die erfindungsgemäßen Verbindungen zu reduzieren und hierdurch zur Abspaltung der fotografisch wirksamen Gruppe zu aktivieren vermag. Geeignete ED-Verbindungen sind beispielsweise in DE-A-2 809 716 und DE-A-2 947 425 beschrieben.

Gemäß einer besonders bevorzugten Ausführungsform werden als ED-Verbindungen sogenannte ED-Vorläufer-Verbindungen eingesetzt. Hierunter werden allgemein solche Verbindungen verstanden, die die für die reduktive Spaltung der erfindungsgemäßen Verbindungen erforderliche reduktionsaktive Funktion in chemisch verkappter Form enthalten. Erst bei bestimmten pH-Werten werden die ED-Vorläuferverbindungen in ED-Verbindungen überführt, die dann erst befähigt sind, mit der erfindungsgemäßen Verbindung zu reagieren. Hierdurch erreicht man eine weitere zeitliche Differenzierung der Reaktionsabläufe und damit verbesserte Möglichkeiten, den gesamten Mechanismus zu steuern. Geeignete ED-Vorläuferverbindungen sind Gegenstand der DE-A-3 006 268.

Die ED-Verbindungen bzw. ED-Vorläuferverbindungen werden vorzugsweise so in das fotografische Material eingebracht bzw. das fotografische Material so aufgebaut, daß diese nur für die Entstehung des jeweiligen Teilfarbbildes wirksam werden können. Ein fotografisches Aufzeichnungsmaterial zur Herstellung von Farbbildern in naturgetreuen Farben enthält demnach drei Schichteinheiten zur Herstellung der drei Teilfarbbilder, und zwar eine Schichteinheit mit einer blauempfindlichen Silberhalogenidemulsionsschicht und Mitteln zur Erzeugung des gelben Teilfarbenbildes, eine Schichteinheit mit einer grünempfindliche Silberhalogenidemulsionsschicht und Mitteln zur Erzeugung des purpurfarbenen Teilfarbenbildes und schließlich eine Schichteinheit mit einer rotempfindlichen Silberhalogenidemulsionsschicht und Mitteln zur Erzeugung des blaugrünen Teilfarbenbildes. Die ED-Verbindungen bzw. ED-Vorläuferverbindungen werden nun so eingesetzt, daß sie jeweils nur in der ihnen zugeordneten Schichteinheit wirksam werden. Dies kann z. B. dadurch erreicht werden, daß die betreffenden Schichteinheiten durch Zwischenschichten getrennt sind, die Verbindungen zum Abfangen der ED-Verbindungen bzw. ED-Vorläuferverbindungen enthalten. Eine andere Möglichkeit, die Wirkung der ED-Verbindungen bzw. ED-Vorläuferverbindungen auf die betreffende Schichteinheit zu beschränken, besteht darin, diese Verbindungen in diffusionsfester Form einzulagern. Dies wird mit den üblichen Mitteln erreicht, z. B. durch Substitution mit Ballastgruppen, im allgemeinen langkettigen Alkylresten, oder durch Inkorporierung in heterodisperser Form, gelöst in sogenannten Ölbildnern. Die hierfür erforderliche Technik ist aus der Einbringung von Farbkupplern in konventionelle farbfotografische Materialien bekannt.

Bei der Entwicklung reagiert die eingesetzte ED-Verbindung bzw. bei Verwendung von ED-Vorläuferverbindungen die unter alkalischen Bedingungen daraus entstehende ED-Verbindung sofort mit dem oxidierten fotografischen Entwickler und verliert damit die Fähigkeit, die erfindungsgemäße Verbindung reduktiv zu spalten. Die oxidierte Entwicklersubstanz wird hierbei reduziert und steht damit erneut für die Entwicklung weiteren belichteten Halogensilbers zur Verfügung.

An den unbelichteten Stellen dagegen steht kein oxidierter fotografischer Entwickler zur Verfügung. Daher reagiert die (gegebenenfalls hydrolytisch aus der ED-Vorläuferverbindung entstehende) ED-Verbindung sofort mit der erfindungsgemäßen Verbindung unter reduktiver Spaltung und Bildung der diffusionsfähigen, fotografisch wirksamen Verbindung, vorteilhafterweise eines Bildfarbstoffes.

ED-Verbindung bzw. ED-Vorläuferverbindung einerseits und die erfindungsgemäße Verbindung andererseits können entweder in getrennten Lösungen eingearbeitet werden; in vielen Fällen ist es jedoch vorteilhaft, die ED-Verbindung bzw. ED-Vorläuferverbindung gemeinsam mit der erfindungsgemäßen Verbindung einzuarbeiten, so daß diese beiden Reaktionspartner gemeinsam in den Tröpfchen des Ölbildners enthalten sind.

Da die Reaktion der reduktiven Spaltung wiederum mit einer bestimmten Geschwindigkeit abläuft und diese Geschwindigkeit von der Art der Reaktionspartner abhängig ist, gelingt es durch geeignete Auswahl des Reaktionspaares ED-Verbindung und erfindungsgemäße Verbindung, die Entstehung der diffusionsfähigen fotografisch wirksamen Verbindung zu steuern und dadurch optimale Ergebnisse zu erreichen. Die Konzentration der ED-Verbindungen bzw. der ED-Vorläuferverbindungen in den Schichteinheiten des fotografischen Materials kann innerhalb weiter Grenzen schwanken. Im allgemeinen haben sich Konzentrationsverhältnisse von ED-Verbindung bzw. ED-Vorläuferverbindung zur erfindungsgemäßen Verbindung von 1 : 2 bis 2 : 1, vorzugsweise 1 : 1 bis 2 : 1, als brauchbar erwiesen.

Als ED-Verbindungen bzw. ED-Vorläuferverbindungen sind beispielsweise die folgenden geeignet:

ED 1

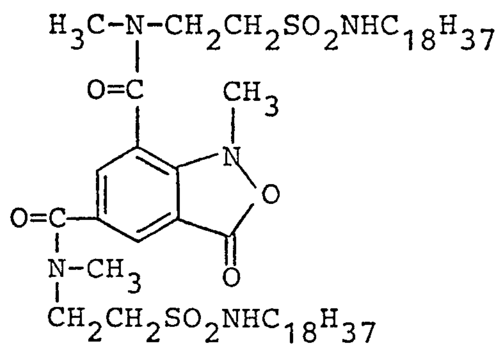

ED 2

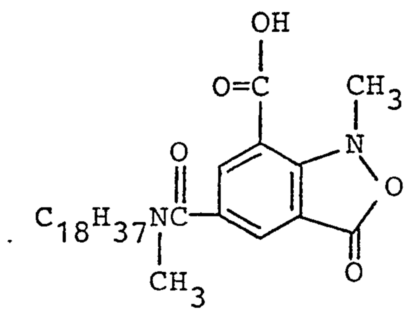

ED 3

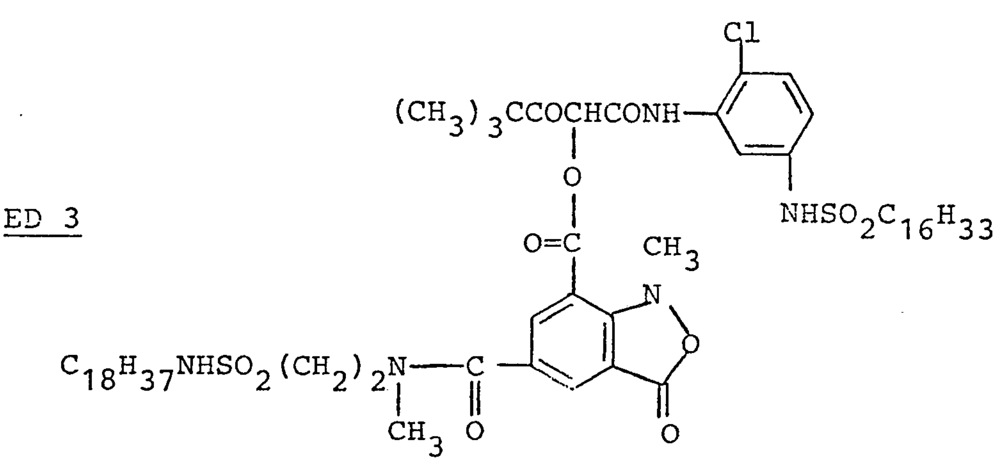

ED 4

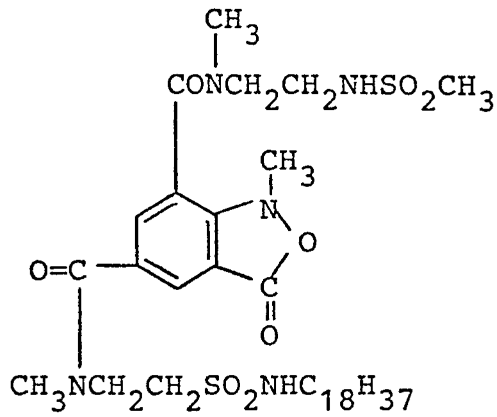

ED 5

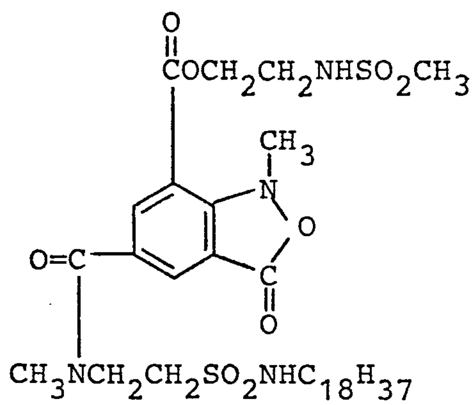

ED 6

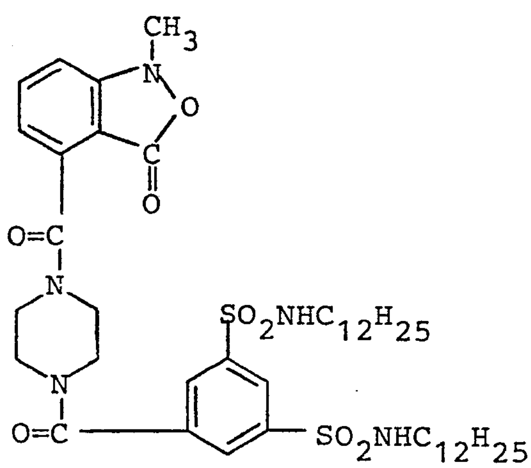

ED 7

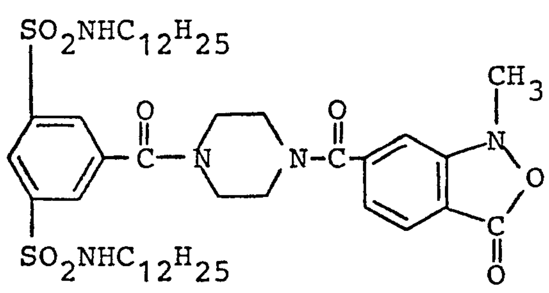

ED 8

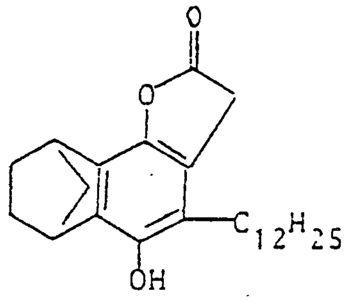

ED 9

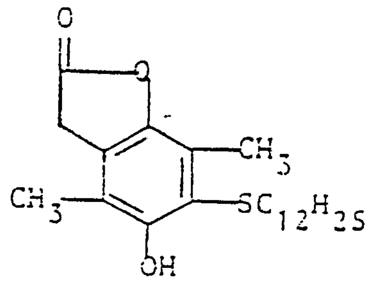

ED 10

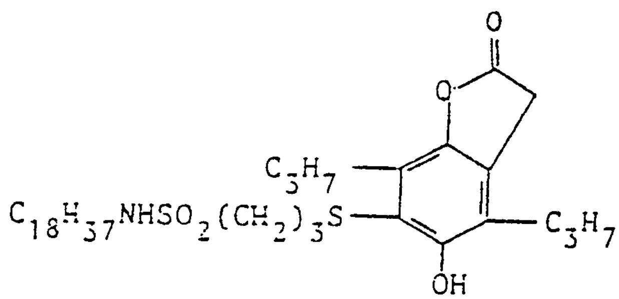

ED 11

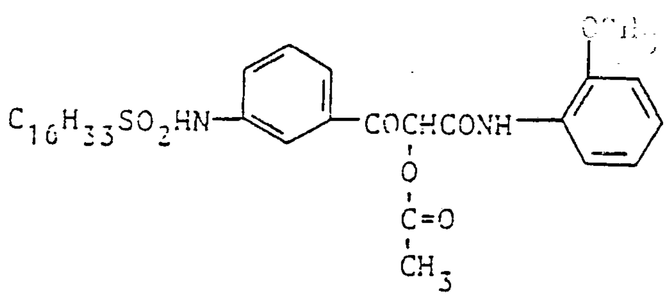

ED 12

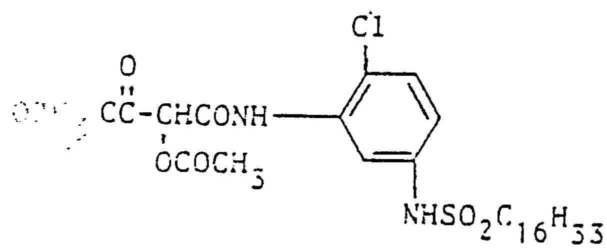

ED 13

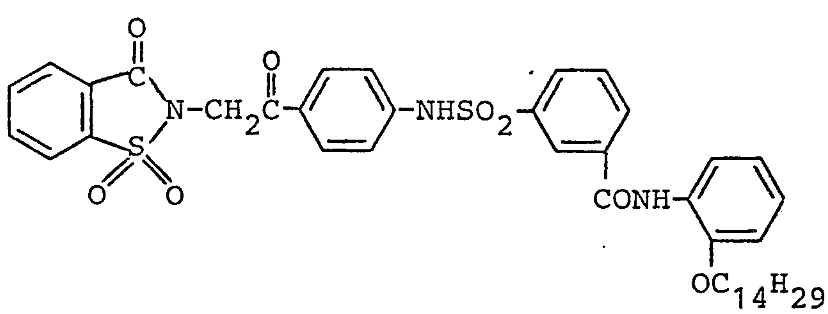

ED 14

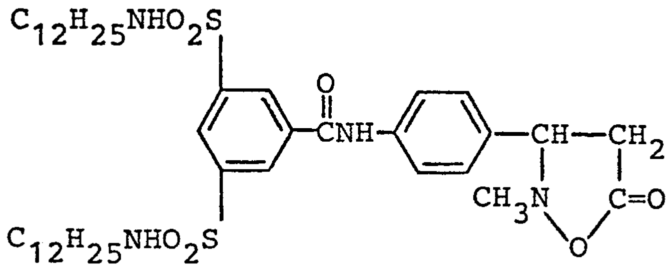

ED 15

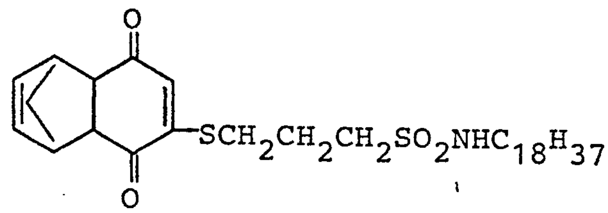

ED 16

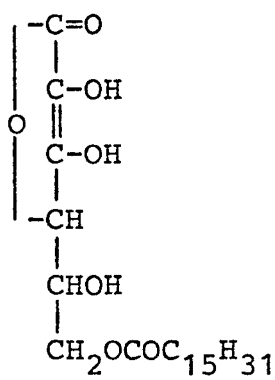

ED 17

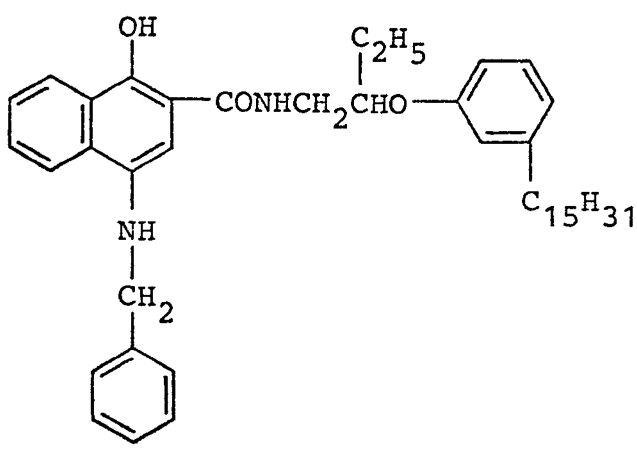

ED 18

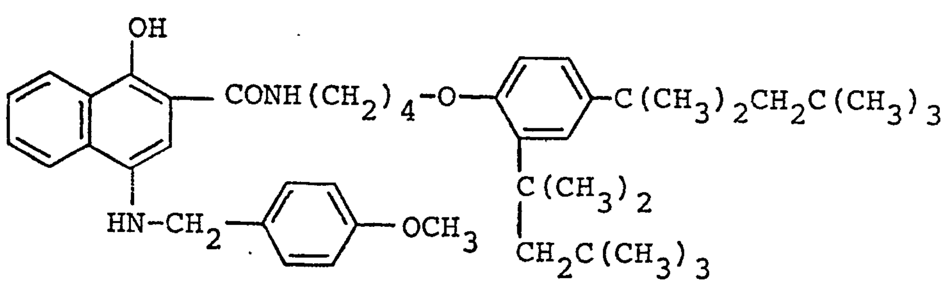

ED 19

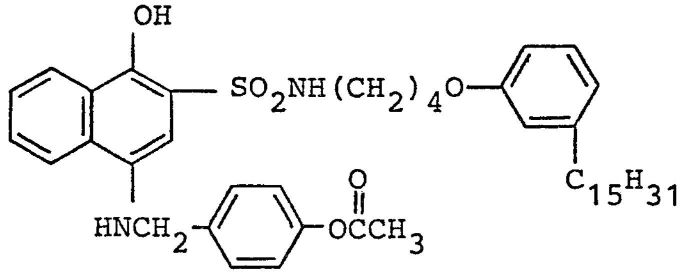

ED 20

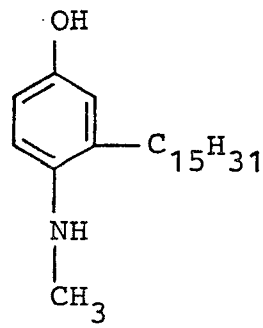

ED 21

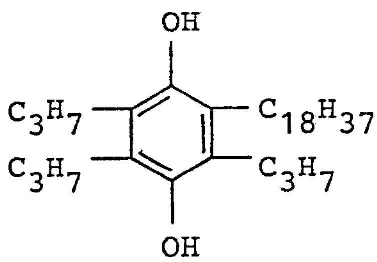

Wie erwähnt reagieren in erfindungsgemäßen Materialien an unbelichteten Stellen die ED-Verbindungen mit der erfindungsgemäßen Verbindung I. Der genaue Mechanismus der Folgereaktion ist noch nicht vollständig aufgeklärt; ohne hiermit den Anmeldungsgegenstand in irgendeiner Weise zu beschränken wird angenommen, daß sich in Abhängigkeit von der speziellen Struktur der Verbindung I folgende Vorgänge abspielen können:

a) Eine intramolekulare Substitutionsreaktion ($S_N$) oder
b) eine Eliminierungsreaktion (E).

Beispielhaft für eine $S_N$-Reaktion sei folgender Reaktionsweg angenommen, demonstriert in vitro anhand einer nicht erfindungsgemäßen Verbindung (W = H) der Formel I, in der bedeuten:

W = $-H$
E = $-NO_2$
$XR^2$ = $-OH$
G = $-NR-CO-$
$R^1$ = $-O-A$
$R^0$ = Rest zur Vervollständigung eines Benzolringes

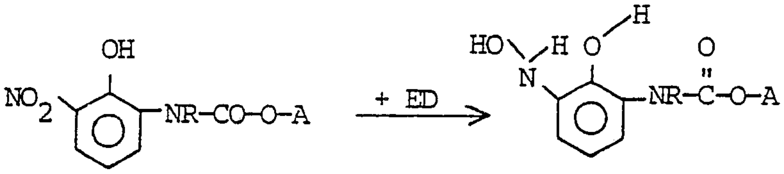

Nach Reduktion der elektronenabziehenden $NO_2$-Gruppe kann sich gegebenenfalls unter Ausbildung eines Zwischenzustandes

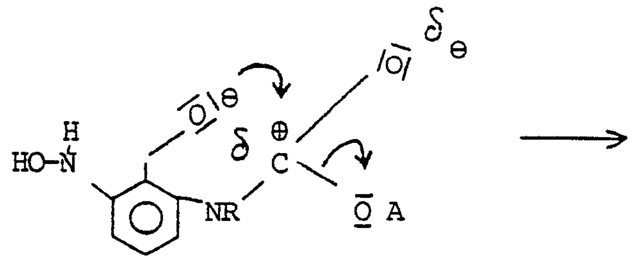

die Verbindung I aufspalten unter Bildung von

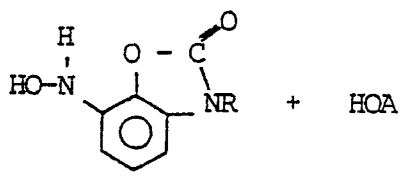

Beispielhaft für eine E-Reaktion sei folgender Reaktionsweg angenommen, demonstriert in vitro anhand einer nicht erfindungsgemäßen Verbindung (W = H) der Formel I, in der bedeuten:

$R^0$ = Rest zur Vervollständigung eines Benzolringes
E = $-NO_2$
W = $-H$
$XR^2$ = $-OH$
G = $-CH(CH_3)-$

$R^1$ = $-SO_2-A$

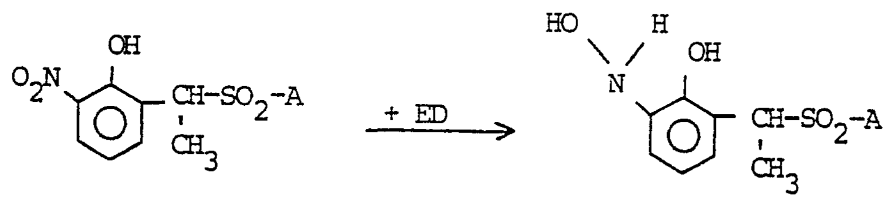


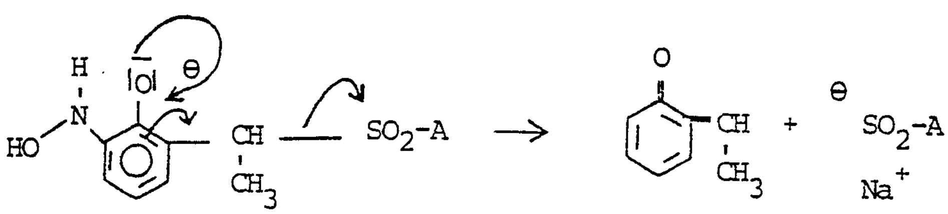

Die erfindungsgemäßen nicht diffundierenden reduzierbaren Verbindungen werden den Gießlösungen für die Schichten des fotografischen Materials nach einer der üblichen Methoden einverleibt. Die pro Liter Gießlösung verwendete Menge an nicht diffundierender reduzierbarer Verbindung variiert in relativ weiten Grenzen, wobei die günstigste Konzentration anhand einfacher Versuche festgestellt wird. Beispielsweise werden pro Liter Gießlösung 5 bis 80 g, vorzugsweise 20 bis 40 g, reduzierbare Verbindung verwendet.

Die zur Erzielung des gewünschten Effektes erforderliche Zuordnung zwischen nicht diffundierender reduzierbarer Verbindung und Silberhalogenid kann beispielsweise dadurch hergestellt werden, daß die erfindungsgemäßen Verbindungen unter Ausnutzung vorhandener stark saurer wasserlöslich machender Gruppen aus wäßriger Lösung in die Gießlösungen eingebracht werden. Die nicht-diffundierenden reduzierbaren Verbindungen können aber auch in die Schichten nach einem der bekannten Emulgierverfahren eingebracht werden. Solche Verfahren sind beispielsweise in den englichen Patentschriften 791 219 und 1 099 414 bis 1 099 417 beschrieben. Weiterhin ist es möglich, wäßrige Dispersionen der reduzierbaren Verbindungen herzustellen und den jeweiligen Gießlösungen

zuzusetzen. Hierzu werden wäßrige Aufschlämmungen der reduzierbaren Verbindung beispielsweise durch intensives Rühren unter Zusatz von scharfkantigem Sand oder durch Anwendung von Ultraschall fein vermahlen. In einer weiteren Ausführungsform kann es beispielsweise erwünscht sein, die reduzierbaren Verbindungen gemeinsam mit Silberhalogenid und gegebenenfalls Entwicklersubstanzen in Form sogenannter Mikrokapseln in die Schicht einzulagern, wobei auch zwei oder mehr verschieden sensibilisierte lichtempfindliche Silberhalogenidemulsionen und die entsprechenden diffusionsfesten Verbindungen in einer einzigen Schicht nach Art der sogenannten Mischkornemulsionen vereinigt werden, wie dies beispielsweise in der US-A-2 698 794 beschrieben ist. Die nicht-diffundierenden reduzierbaren Verbindungen können in einer lichtempfindlichen Schicht selbst oder in einer Nachbarschicht untergebracht sein. Falls es sich um farbgebende Verbindungen handelt, ist beispielsweise der rotempfindlichen Schicht eine einen blaugrünen Farbstoff abspaltende Verbindung, der grünempfindlichen Schicht eine einen purpurnen Farbstoff abspaltende Verbindung und der blauempfindlichen Schicht eine einen gelben Farbstoff abspaltende Verbindung zugeordnet.

Unter »Zuordnung« und »zugeordnet« ist hierbei zu verstehen, daß die gegenseitige Anordnung von Silberhalogenidemulsionsschicht, nicht-diffundierender farbgebender Verbindungen und ED-Verbindung von solcher Art ist, daß eine Wechselwirkung zwischen ihnen möglich ist, die eine bildgemäße Übereinstimmung zwischen gebildetem Silberbild und bildmäßiger Verteilung des Oxidationsproduktes der ED-Verbindung einerseits und bildmäßiger Verteilung der bei der Silberhalogenidentwicklung nicht oxidierten ED-Verbindung und bildmäßiger Verteilung an freigesetztem diffusionsfähigem Farbstoff andererseits zuläßt. Dies kann beispielsweise dadurch erreicht werden, daß farbgebende Verbindung und ED-Verbindung in der gleichen Schicht enthalten sind, möglichst in der zugeordneten lichtempfindlichen Silberhalogenidemulsionsschicht oder in einer hierzu benachbarten nicht lichtempfindlichen Bindemittelschicht.

Erfindungsgemäße Verbindungen, die als diffusionsfähige, fotografisch wirksame Reste andere als Bildfarbstoff bildende enthalten, werden den fotografischen Materialien in ähnlicher Weise zugesetzt wie erfindungsgemäße farbgebende Verbindungen, d. h. je nach Art des fotografisch wirksamen Restes entweder in der lichtempfindlichen Silberhalogenidemulsionsschicht oder in hierzu benachbarten Schichten. Je nach Funktion und der gewünschten Wirkung sind Konzentrationen von vorzugsweise 0,01 bis 10 $g/m^2$ anwendbar. Im Falle von Entwicklungsinhibitoren oder Stabilisatoren als fotografisch wirksame, diffusionsfähige Reste werden die erfindungsgemäßen Verbindungen im fotografischen Material so eingesetzt, daß sie in Kontakt mit den Silberhalogenidemulsionen wirken können. An den unbelichteten Stellen wird dann in bildmäßiger Verteilung der Entwicklungsinhibitor oder der Stabilisator freigesetzt. Dies hat zur Folge, daß die Bildung von entwickeltem Silber in den wenig oder nicht belichteten Schichtbereichen wirksam unterdrückt wird. Da die Bildung von entwickeltem Silber durch Desaktivierung der ED-Verbindungen bzw. ED-Vorläuferverbindungen die Bildung von Farbstoffen unterdrückt, wird bei der gleichzeitigen Verwendung von farbgebenden erfindungsgemäßen Verbindungen und erfindungsgemäßen Verbindungen, die Entwicklungsinhibitoren in Freiheit setzen, an den nicht belichteten Stellen die Farbstoffbildung begünstigt und dadurch die Bildfarbstoffdichte erhöht.

Die Entwicklerverbindungen haben im wesentlichen die Funktion, das bildmäßig belichtete Silberhalogenid zu entwickeln und in bildmäßiger Übereinstimmung mit dem entwickelten Silberhalogenid die ED-Verbindung zu oxidieren und hierdurch der nachfolgenden Reaktion mit den erfindungsgemäßen Verbindungen zu entziehen.

Als Entwickler- bzw. Hilfsentwicklerverbindungen sind im allgemeinen die üblichen fotografischen Entwickler geeignet, z. B. Hydrochinon oder Derivate davon wie 2,5-Dichlorhydrochinon und 2-Chlorhydrochinon; Aminophenol-Verbindungen wie 4-Aminophenol, N-Methylaminophenol, 3-Methyl-4-aminophenol oder 3,5-Dibromaminophenol; Brenzkatechin oder Derivate davon wie 4-Cyclohexylbrenzkatechin, 3-Methoxybrenzkatechin und 4-(N-Octadecylamino)brenzkatechin; Phenylendiamin-Entwickler wie N,N-Diethyl-p-phenylendiamin, 3-Methyl-N,N-diethyl-p-phenylendiamin, 3-Methoxy-N-ethyl-N-hydroxyethyl-N,N-diethyl-p-phenylendiamin, 3-Methoxy-N-ethyl-N-hydroxyethyl-p-phenylendiamin oder N,N,N',N'-Tetramethyl-p-phenylendiamin.

Bevorzugt sind jedoch fotografische Entwickler des 3-Pyrazolidon-Typs, z. B.

1-Phenyl-3-pyrazolidon,
1-Phenyl-4,4-dimethyl-3-pyrazolidon,
4-Hydroxymethyl-4-methyl-1-phenyl-3-pyrazolidon,
1-Phenyl-4-methyl-3-pyrazolidon,
1-Phenyl-5-methyl-3-pyrazolidon,
1-Phenyl-4,4-bis-(hydroxymethyl)-3-pyrazolidon,
1,4-Dimethyl-3-pyrazolidon,
4-Methyl-3-pyrazolidon,
4,4-Dimethyl-3-pyrazolidon,
1-(3-Chlorphenyl)-4-methyl-3-pyrazolidon,
1-(4-chlorphenyl)-4-methyl-3-pyrazolidon,
1-(3-Chlorphenyl)-3-pyrazolidon,
1-(4-Chlorphenyl)-3-pyrazolidon,

1-(4-Tolyl)-4-methyl-3-pyrazolidon,
1-(2-Tolyl)-4-methyl-3-pyrazolidon,
1-(4-Tolyl)-3-pyrazolidon,
1-(3-Tolyl)-3-pyrazolidon,
1-(3-Tolyl)-4,4-dimethyl-3-pyrazolidon,
1-(2-Trifluormethyl)-4,4-dimethyl-3-pyrazolidon und
5-Methyl-3-pyrazolidon.

Die für das jeweilige spezielle System optimal wirkenden Entwicklerverbindungen können durch übliche Routineversuche unschwer ermittelt werden. Selbstverständlich ist es auch möglich, Kombinationen mehrerer Entwicklerverbindungen einzusetzen.

Die fotografischen Entwickler können auf verschiedene Weise dem in dem fotografischen Material ablaufenden Reaktionsmechanismus zugeführt werden. Sie können z. B. der Entwicklerflüssigkeit zugesetzt werden und mit dieser in üblicher Weise zur Anwendung kommen. Sie können auch ganz oder teilweise einer Schicht oder mehreren Schichten des fotografischen Materials zugesetzt werden, z. B. einer oder mehreren der lichtempfindlichen Silberhalogenidemulsionsschichten, Hilfsschichten, Zwischenschichten oder auch Bildempfangsschichten.

Da die bildmäßige Verteilung des bei der Entwicklung freigesetzten diffundierenden Farbstoffes mit der bildmäßigen Verteilung des nicht entwickelten Silberhalogenids übereinstimmt, bedarf es zur Erzeugung positiver farbiger Übertragungsbilder nicht der Verwendung von direkt-positiven Silberhalogenidemulsionen oder der Anwendung eines geeigneten Umkehrverfahrens, sondern es können übliche Negativemulsionen verwendet werden. Diese können in bekannter Weise chemisch oder spektral sensibilisiert sein sowie die üblichen Emulsionszusätze, wie Stabilisatoren, Härtungsmittel, Netzmittel, Ölbildner und dergleichen enthalten.

Zur Durchführung des Farbstoffdiffusionsübertragungsverfahrens gemäß der vorliegenden Erfindung wird ein lichtempfindliches Element verwendet, das eine oder mehrere Silberhalogenidemulsionsschichten sowie die diesen zugeordneten nicht-diffundierenden farbgebenden Verbindungen enthält, und ein Bildempfangselement, in dem durch die bildmäßig übertragenen diffundierenden Farbstoffe das gewünschte Farbbild erzeugt wird. Hierzu ist es erforderlich, daß zwischen dem lichtempfindlichen Element und dem Bildempfangselement mindestens während eines endlichen Zeitraumes innerhalb der Entwicklungszeit ein fester Kontakt besteht, so daß die in dem lichtempfindlichen Element als Folge der Entwicklung erzeugte bildmäßige Verteilung an diffundierenden Farbstoffen auf das Bildempfangselement übertragen werden kann. Der Kontakt kann hergestellt werden, nachdem die Entwicklung in Gang gesetzt worden ist, oder er kann bereits hergestellt worden sein, bevor die Entwicklung beginnt.

Letzteres ist beispielsweise der Fall, falls zur Durchführung des Farbstoffdiffusionsübertragungsverfahrens ein Material verwendet wird, in dem das lichtempfindliche Element und das Bildempfangselement eine integrale Einheit bilden, im folgenden auch als Monoblattmaterial bezeichnet, die auch nach Beendigung des Entwicklungsvorganges weiter bestehen bleibt, d. h. eine Abtrennung des lichtempfindlichen Elements von dem Bildempfangselement ist auch nach erfolgtem Farbübertrag nicht vorgesehen. Eine solche Ausführungsform ist beispielsweise beschrieben in der DE-A-2 019 430.

Ein für die Durchführung des Farbstoffdiffusionsübertragungsverfahrens gemäß der vorliegenden Erfindung geeignetes Monoblattmaterial weist beispielsweise folgende Schichtelemente auf:

1) einen transparenten Schichtträger
2) eine Bildempfangsschicht
3) eine lichtundurchlässige Schicht
4) ein lichtempfindliches Element mit mindestens einer lichtempfindlichen Silberhalogenidemulsionsschicht und mindestens einer dieser zugeordneten nicht-diffundierenden farbgebenden Verbindung
5) eine Verzögerungsschicht
6) eine saure Polymerschicht
7) einen transparenten Schichtträger

Das Monoblattmaterial kann dabei in der Weise zusammengesetzt werden, daß getrennt voneinander zwei verschiedene Teile hergestellt werden, nämlich der lichtempfindliche Teil (Schichtelemente 1 bis 4) und das Abdeckblatt (Schichtelemente 5 bis 7), die dann schichtseitig aufeinandergelegt und miteinander verbunden werden, gegebenenfalls unter Verwendung von Abstandsstreifen, so daß zwischen den beiden Teilen ein Raum für die Aufnahme einer genau bemessenen Menge einer Arbeitsflüssigkeit gebildet wird. Die Schichtelemente 5 und 6, die zusammen das Neutralisationssystem bilden, können auch zusätzlich oder alternativ — allerdings in vertauschter Reihenfolge — zwischen dem Schichtträger und der Bildempfangsschicht des lichtempfindlichen Teiles angeordnet sein.

Es können Mittel vorgesehen sein, um eine Entwickler- oder Aktivatorflüssigkeit zwischen den lichtempfindlichen Teil und das Abdeckblatt einzuführen, z. B. in Form eines seitlich angeordneten

aufspaltbaren Behälters, der bei Einwirkung mechanischer Kräfte seinen Inhalt zwischen zwei benachbarte Schichten des Monoblattmaterials ergießt.

Ein wesentlicher Teil des fotografischen Aufzeichnungsmaterials gemäß der vorliegenden Erfindung ist das lichtempfindliche Element, das im Falle eines Einfarbstoffübertragungsverfahrens eine lichtempfindliche Silberhalogenidemulsionsschicht und dieser zugeordnet eine erfindungsgemäße nicht-diffundierende farbgebende Verbindung enthält. Dabei kann sich die nicht-diffundierende Verbindung in einer zu der Silberhalogenidemulsionsschicht benachbarten Schicht oder in der Silberhalogenidemulsionsschicht selbst befinden, wobei im letzteren Fall die Farbe des Bildfarbstoffes bevorzugt so ausgewählt wird, daß der überwiegende Absorptionsbereich der farbgebenden Verbindung nicht übereinstimmt mit dem überwiegenden Empfindlichkeitsbereich der Silberhalogenidemulsionsschicht.

Zur Herstellung mehrfarbiger Übertragsbilder in naturgetreuen Farben enthält das lichtempfindliche Element jedoch drei derartige Zuordnungen von farbgebender Verbindung und lichtempfindlicher Silberhalogenidemulsionsschicht, wobei in der Regel der Absorptionsbereich der farbgebenden Verbindung mit dem Bereich der spektralen Empfindlichkeit der zugeordneten Silberhalogenidemulsionsschicht im wesentlichen übereinstimmen wird und wobei nach der vorliegenden Erfindung wenigstens eine der farbgebenden Verbindungen eine erfindungsgemäße nicht-diffundierende reduzierbare Verbindung ist. Günstig für die Erzielung einer möglichst hohen Empfindlichkeit ist dann jedoch, wenn jeweils die farbgebende Verbindung in einer separaten Bindemittelschicht (gesehen in Richtung des bei der Belichtung einfallenden Lichtes) hinter der Silberhalogenidemulsionsschicht angeordnet ist.

Die bei der Entwicklung einer Silberhalogenidemulsion entstehenden Entwickleroxidationsprodukte dürfen sich selbstverständlich nur auf die zugeordnete farbgebende Verbindung auswirken. Es sind deshalb im allgemeinen in dem lichtempfindlichen Element Trennschichten vorhanden, die die Diffusion der Entwickleroxidationsprodukte in andere nicht zugeordnete Schichten wirksam unterbinden.

Diese Trennschichten können z. B. geeignete Substanzen enthalten, die mit den Entwickleroxidationsprodukten reagieren, beispielsweise nicht-diffundierende Hydrochinon-Derivate oder, falls es sich bei dem Entwickler um eine Farbentwicklersubstanz handelt, nicht-diffundierende Farbkuppler. In einer bevorzugten Ausführungsform hat deshalb das lichtempfindliche Element folgenden Aufbau (von oben nach unten):

blauempfindliche Silberhalogenidemulsionsschicht;
Schicht mit nicht-diffundierender, einen diffusionsfähigen Gelbfarbstoff freisetzender Verbindung;
Trennschicht;
grünsensibilisierte Silberhalogenidemulsionsschicht;
Schicht mit nicht-diffundierender, einen diffusionsfähigen Purpurfarbstoff freisetzender Verbindung;
Trennschicht;
rotsensibilisierte Silberhalogenidemulsionsschicht;
Schicht mit nicht-diffundierender, einen diffusionsfähigen Blaugrünfarbstoff freisetzender Verbindung.

Selbstverständlich können die Silberhalogenidemulsionsschichten auch in anderer Reihenfolge angeordnet sein, wobei jedoch die zugeordneten Schichten mit den farbgebenden Systemen ebenfalls vertauscht werden müssen, so daß die jeweiligen Zuordnungen erhalten bleiben.

Die unter dem lichtempfindlichen Element angeordnete lichtundurchlässige Schicht ist durchlässig für wäßrige alkalische Behandlungslösungen und damit für die diffundierenden Farbstoffe. Sie hat im wesentlichen zwei Funktionen: erstens dient sie dazu, das nach der Entwicklung in dem ursprünglich lichtempfindlichen Element verbleibende Bildsilber sowie die als Farbnegativ zurückbleibenden farbgebenden Verbindungen abzudecken, so daß bei der Betrachtung durch den transparenten Schichtträger des lichtempfindlichen Teils nur das positive Farbübertragungsbild sichtbar ist; zweitens schließt sie das lichtempfindliche Element nach der Seite der Bildempfangsschicht (nach unten) lichtdicht ab. Letzteres ist besonders dann von Bedeutung, wenn das Monoblattmaterial nach der Belichtung noch in der Kamera mit der alkalischen Verarbeitungsmasse in Berührung gebracht, dann aus der Kamera herausgezogen und außerhalb der Kamera entwickelt werden soll.

Schichten mit genügender Lichtundurchlässigkeit, aber genügender Durchlässigkeit für diffundierende Farbstoffe können in bekannter Weise mit Suspensionen anorganischer oder organischer Pigmente, beispielsweise mit Suspensionen von Ruß und/oder $TiO_2$, in geeigneten Bindemitteln, z. B. in Gelatinelösungen, hergestellt werden.

Anstelle einer lichtundurchlässigen Schicht können auch Mittel zur Erzeugung einer solchen lichtundurchlässigen Schicht zwischen dem lichtempfindlichen Element und der Bildempfangsschicht vorgesehen sein, z. B. in Form eines seitlich angeordneten Behälters mit einer ein Trübungsmittel (Pigment) enthaltenden Arbeitsflüssigkeit, der bei Einwirkung mechanischer Kräfte seinen Inhalt

zwischen die genannten Schichten ergießt, so daß sich dort eine derartige Pigmentschicht bildet.

Die Bildempfangsschicht besteht im wesentlichen aus einem Bindemittel, das Farbstoffbeizmittel für die Festlegung der diffundierenden Farbstoffe enthält, z. B. nichtdiffundierende monomere oder polymere Verbindungen mit quaternären Ammoniumgruppen.

Als transparente Schichtträger für das erfindungsgemäße Monoblattmaterial können die üblichen in der fotografischen Praxis verwendeten transparenten Trägermaterialien, z. B. Film aus Celluloseestern, Polyethylenterephthalat, Polycarbonat oder andere filmbildende Polymere, Verwendung finden.

Neutralisationssysteme, worunter Kombinationen aus einer sauren Polymerschicht und einer Verzögerungsschicht verstanden werden, sind beispielsweise beschrieben in der DE-C-1 285 310. Derartige Schichtkombinationen können in dem erfindungsgemäßen Material vorhanden sein, beispielsweise in dem lichtempfindlichen Teil zwischen dem transparenten Schichtträger und der Bildempfangsschicht. Sie dienen dazu, den in dem Aufzeichnungsmaterial durch Verteilen der alkalischen Entwickler- oder Aktivatorflüssigkeit eingestellten vergleichsweise hohen pH-Wert für eine gewisse Zeit aufrechtzuerhalten und danach, wenn die Verzögerungsschicht ihre Funktion erfüllt hat, möglichst rasch durch Neutralisation mit der sauren Polymerschicht abzusenken. Das Neutralisationssystem aus saurer Polymerschicht und Verzögerungsschicht kann auch auf dem Deckblatt angeordnet sein. Selbstverständlich müssen diese beiden Schichten in einer derartigen Reihenfolge angeordnet sein, daß das Entwickleralkali zunächst die Verzögerungsschicht durchdringen muß, um in die saure Polymerschicht zu gelangen.

Das erfindungsgemäße Farbstoffdiffusionsübertragungsverfahren läßt sich vorteilhaft in bzw. mittels einer geeigneten Selbstentwicklerkamera durchführen. Diese kann z. B. mit Vorrichtungen versehen sein, die es ermöglichen, nach der Belichtung des lichtempfindlichen Elements zwischen diesem und dem Deckblatt eine Entwicklerflüssigkeit zu verteilen und das lichtempfindliche Material nach oben lichtundurchlässig abzudecken. Vorzugsweise ist eine solche Kamera mit zwei gegeneinander gelagerten Quetschwalzen versehen, zwischen denen das Monoblattmaterial herausgezogen wird, wobei die seitlich angeordneten Behälter aufgespalten werden und ihren Inhalt zwischen die Schichten des Monoblattmaterials entlassen.

Falls das lichtempfindliche Element nach dem Passieren der Quetschwalzen beiderseits durch lichtundurchlässige Schichten gegen unerwünschte Belichtung geschützt ist, kann das belichtete Material unmittelbar nach Ingangsetzen der Entwicklung aus der Kamera herausgezogen werden.

Zur Verarbeitung wird das bildmäßig belichtete lichtempfindliche Element in Kontakt gebracht mit der wäßrig-alkalischen Entwicklerflüssigkeit. Hierbei werden in Gegenwart der Entwicklerverbindung die bildmäßig belichteten Silberhalogenidemulsionsschichten entwickelt, wobei in Übereinstimmung mit dem dabei gebildeten Silberbild eine bildmäßige Verteilung von Oxidationsprodukten der Entwicklerverbindung erzeugt wird, die die zugeordnete ED-Verbindung oxidiert, und damit der nachfolgenden Reaktion mit der erfindungsgemäßen reduzierbaren Verbindung entzieht; die verbleibende bildmäßige Verteilung (Restbild) an ED-Verbindung reduziert die erfindungsgemäße reduzierbare farbgebende Verbindung in deren reduzierter Form; aus der unter der Einwirkung des Aktivator- bzw. Entwickleralkali der diffundierende Farbstoff abgespalten wird.

Die wäßrig-alkalische Entwicklerflüssigkeit kann viskositätserhöhende Zusätze enthalten, z. B. Hydroxyethylcellulose. Weiterhin kann sie in bekannter Weise Entwicklungsbeschleuniger, Stabilisatoren, Silbersalzlösungsmittel, Schleiermittel, Antioxidantien und weitere Zusätze enthalten.

Vorstehend wurde die Erfindung anhand von Beispielen erläutert, in denen die fotografisch wirksame Gruppe ein diffundierender Farbstoff oder diffundierendes Farbstoffvorprodukt ist. Es sind jedoch auch andere Ausführungsformen denkbar, bei denen die fotografisch wirksame Gruppe beispielsweise ein Antischleiermittel, ein Entwicklungsinhibitor, ein Härtungsmittel, ein Entwicklungsmittel oder ein die Entwicklung beschleunigendes Mittel ist. In allen diesen Fällen wird die fotografisch wirksame Gruppe bildmäßig in Freiheit gesetzt, d. h. in Übereinstimmung mit bildmäßiger Verteilung an nicht entwickeltem Silberhalogenid bei Verwendung von Negativemulsionen. Hierdurch ergeben sich vielfältige Möglichkeiten zur Bilderzeugung.

## Ausführungsbeispiel 1

Auf einen transparenten Schichtträger aus Cellulosetriacetat wurden in folgender Reihenfolge eine Beizschicht, eine lichtreflektierende Schicht und eine lichtempfindliche Silberhalogenidemulsionsschicht aufgetragen.

### Beizschicht

3,75 g eines Copolymerisates aus 1 Teil Styrol und 1 Teil Maleinsäureimid von N,N-Dimethyl-N-hexadecyl-N-$\omega$-aminopropyl-ammoniumbromid wurden in 15 ml Ethanol gelöst und diese Lösung wurde in 75 ml 5% Gelatinelösung eingerührt und homogenisiert. Nach Zusatz von 2,6 ml 5%iger Saponinlösung

und 1 ml 2%iger wäßriger Mucochlorsäurelösung wurde auf eine übliche Gießviskosität) ca. 11 mPa · s) eingestellt und die Lösung wurde bei 40° C im Tauchverfahren auf den Träger aufgetragen (Gießgeschwindigkeit 5 m/min).

Lichtreflektierende Schicht

Eine Aufschlämmung aus 42 g $TiO_2$ in 20 ml Wasser wurde unter Zusatz von 5 ml 5%iger wäßriger Lösung von Natriumdodecylbenzolsulfonat und 5 ml 5%iger wäßriger Saponinlösung in 150 ml 8%iger wäßriger Gelatinelösung dispergiert. Nach Zugabe von 1 ml 2%iger Mucochlorsäurelösung wurde die Dispersion auf eine Viskosität von 13 mPa · s bei 40° C eingestellt und im Tauchverfahren auf die getrocknete Beizschicht aufgetragen (Gießgeschwindigkeit 5 m/min).

Silberhalogenidschicht

Je 2,5 mMol der in der folgenden Tabelle aufgeführten Verbindungen I und 3,75 mMol der ED-Verbindungen wurden in 25 ml Ethylacetat gelöst und unter Zusatz von 5 ml Laurinsäurediethylamid in 100 ml einer 5% Gelatinelösung eindispergiert. Nach weiterer Zugabe von 100 ml 5%iger Gelatine und 3 ml 2%iger Mucochlorsäurelösung wurde jede der Dispersionen mit 50 g einer gießfertigen Silberhalogenidemulsion vermischt. Diese Silberhalogenidemulsion war hergestellt worden mit 74 g $AgNO_3$ pro kg Emulsion; sie hatte ein Ag/Gelatine-Verhältnis von 1 : 1,1 und das Halogenid war hauptsächlich Bromid mit 0,67 Mol-% Jodid. Die Mischungen wurden im Tauchverfahren mit einer Geschwindigkeit von 5 m/min bei 40° C auf die getrocknete lichtreflektierende Schicht aufgetragen.

Die verschiedenen Proben wurden nach dem Trocknen durch einen Graustufenfilter auf der Emulsionsseite belichtet, in dem nachfolgend beschriebenen Entwickler 1 Minute und 4 Minuten bei 20° C entwickelt, gewässert und getrocknet.

Entwickler:

1,5 g Ethylendiamintetraessigsäure-Natriumsalz
1,0 g Natriumhexametaphosphat
2,0 g 1-Phenylpyrazolidin
3,0 g KBr;
auffüllen mit Wasser auf 1000 ml und einstellen auf pH 13,6 mit 2 n NaOH.

Es wurden von jeder der Proben voll durchentwickelte positive Farbkeile erhalten, die durch den transparenten Schichtträger sichtbar waren. Die Farbdichten (Dmin und Dmax) wurden hinter Farbfiltern ausgemessen mit Hilfe eines Reflektionsdensitometers und sind in der folgenden Tabelle zusammengestellt.

Tabelle

| Probe | erfindungsgemäße Verbindung I | ED-Verbindung | Entwicklungszeit (min) | $D_{min}$ | $D_{max}$ |
|---|---|---|---|---|---|
| 1 | 2.1 | ED 1 | 1 | 0.12 | 0.98 |
| 2 | 2.1 | ED 1 | 4 | 0.16 | 1.23 |
| 3 | 2.1 | ED 21 | 1 | 0.10 | 0.87 |
| 4 | 2.1 | ED 21 | 4 | 0.13 | 0.98 |
| 5 | 2.3 | ED 1 | 1 | 0.22 | 1.22 |
| 6 | 2.3 | ED 1 | 4 | 0.29 | 1.29 |
| 7 | 2.7 | ED 1 | 1 | 0.19 | 1.05 |
| 8 | 2.7 | ED 1 | 4 | 0.23 | 1.15 |
| 9 | 2.2 | ED 20 | 1 | 0.12 | 0.79 |
| 10 | 2.2 | ED 20 | 4 | 0.16 | 0.89 |
| 11 | 2.4 | ED 1 | 1 | 0.33 | 1.27 |
| 12 | 2.4 | ED 1 | 4 | 0.35 | 1.52 |

Ausführungsbeispiel 2

Auf das bei Ausführungsbeispiel 1 erhältliche belichtete Material wurde der Inhalt eines bei Diffusionsübertragungsverfahren üblichen Beutels aufgebracht. Die dabei freigesetzte Flüssigkeit enthielt, bezogen auf 1 l wäßrige Lösung, die folgenden Chemikalien:

1,5 g Ethylendiamintetraessigsäure
1 g Natriummetaphosphat
4 g Kaliumbromid
2 g 4-Hydroxymethyl-4-methyl-1-phenyl-3-pyrazolidinon
0,1 g Mercaptophenyltetrazol
50 g Natronlauge
30 g Carboxymethylcellulose
5 ml Benzylalkohol.

Die Wirkung der alkalischen Paste wurde nach 1 bzw. 4 Minuten zum Erliegen gebracht.
In den Bildempfangsschichten wurden positive gut abgestufte Farbstoffbilder mit Bildweißen und maximalen Dichten vergleichbar mit den Werten aus Beispiel 1 gefunden.

**Patentansprüche**

1. Fotografisches Aufzeichnungsmaterial mit mindestens einer lichtempfindlichen Silberhalogenidemulsionsschicht und einer mit dieser in wirksamem Kontakt befindlichen nicht diffundierenden Verbindung mit einem abspaltbaren fotografisch wirksamen Rest, dadurch gekennzeichnet, daß die Verbindung folgender Formel I entspricht:

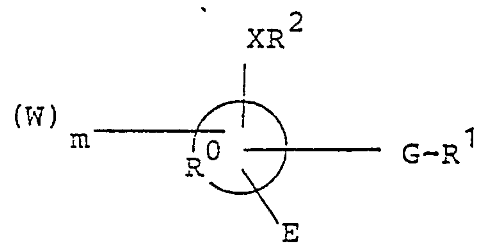

worin die Substituenten W, $XR^2$, $G-R^1$ und E in beliebiger Stellung zueinander angeordnet sein können und worin bedeuten:

- $R^0$ einen Rest zur Vervollständigung eines Ringsystems mit mindestens einem aromatischen oder heteroaromatischen Ring;
- W eine Gruppe, die die Elektronendichte in dem Substituenten E vermindert;
- m eine ganze Zahl von 1 bis 3;
- G eine Gruppe, an der unter den Bedingungen der fotografischen Entwicklung eine Abspaltung von $R^1$ erfolgen kann;
- $R^1$ einen Rest einer diffusionsfähigen fotografisch wirksamen Verbindung;
- X ein Sauerstoffatom, ein Schwefelatom, eine gegebenenfalls substituierte Iminogruppe;
- $R^2$ H oder eine im alkalischen Milieu abspaltbare Gruppe;
- E eine zur Aufnahme von Elektronen befähigte Gruppe;

wobei gilt, daß die Verbindung I mindestens einen diffusionsfest machenden Rest aufweist.

2. Fotografisches Material nach Anspruch 1, worin in Formel I bedeuten:

- $R^0$ die Atome zur Vervollständigung eines 5- oder 6gliedrigen aromatischen oder heteroaromatischen Ringes, an den weitere Ringe ankondensiert sein können;
- W ein Halogenatom oder eine Cyan-, Nitro-, Nitroso-, Trifluormethyl-, quaternäre Ammonium- oder Acylgruppe;
- m ganze Zahl von 1 bis 3;
- $R^2$ eine Acylgruppe;
- X ein Sauerstoffatom, Schwefelatom oder die Gruppe $-NR^3-$;
- E eine der folgenden Gruppen:

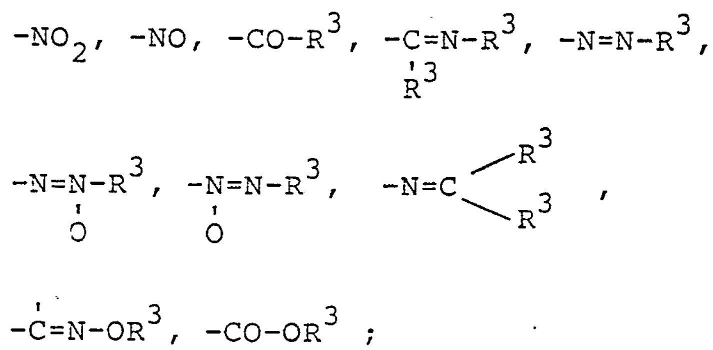

- $R^3$ Wasserstoff, Alkyl, Aryl, eine heterocyclische Gruppe oder Aralkyl.

3. Fotografisches Material nach Anspruch 1, worin in Formel I bedeuten:

- $R^0$ die Atome zur Vervollständigung eines Benzolringes
- W. ein Halogenatom, eine Alkylsulfonylgruppe oder eine Nitrogruppe
- m eine ganze Zahl von 1 bis 3
- X ein Sauerstoffatom
- $R^2$ eine Acylgruppe
- E eine Nitrogruppe.

4. Fotografisches Material nach Anspruch 1, dadurch gekennzeichnet, daß der fotografisch wirksame Rest der Rest eines Farbstoffes oder eines Farbstoffvorläuferproduktes ist.

5. Fotografisches Material nach Anspruch 1, dadurch gekennzeichnet, daß die Silberhalogenidemulsionsschicht eine negativ arbeitende Silberhalogenidemulsion enthält.

6. Material nach Anspruch 1, dadurch gekennzeichnet, daß in wirksamem Kontakt mit der

Verbindung der Formel I eine Elektronendonorverbindung oder Elektronendonorvorläuferverbindung enthalten ist.

7. Fotografisches Material nach Anspruch 1, dadurch gekennzeichnet, daß es als integrale Color-Sofortbild-Einheit aufgebaut ist und in der folgenden Reihenfolge mindestens umfaßt:

a) ein lichtempfindliches Element mit mindestens einer negativ arbeitenden Silberhalogenidemulsionsschicht und einer dieser zugeordneten Kombination aus einer nicht diffundierenden farbgebenden Verbindung der Formel I, in der $R^1$ den Rest eines diffundierenden Farbstoffes oder Farbstoffvorläuferproduktes bedeutet, und einer Elektronendonor-Verbindung oder Elektronendonor-Vorläuferverbindung;
b) eine alkalidurchlässige, lichtreflektierende opake Schicht, und
c) eine Bildempfangsschicht für die Aufnahme des bei der Spaltung der Verbindung der Formel I freigesetzten Farbstoffes oder Farbstoffvorläuferproduktes.

8. Verbindung der allgemeinen Formel I

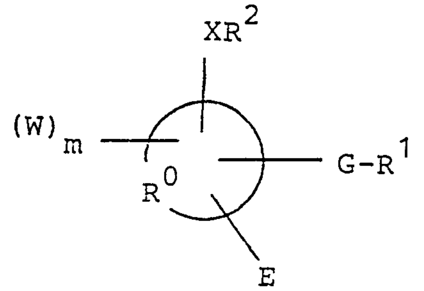

worin die Substituenten W, $XR^2$, $G-R^1$ und E in beliebiger Stellung zueinander angeordnet sein können und worin bedeuten:

$R^0$ einen Rest zur Vervollständigung eines Ringsystems mit mindestens einem aromatischen oder heteroaromatischen Ring;
W eine Gruppe, die die Elektronendichte in dem Substituenten E vermindert;
m eine ganze Zahl von 1 bis 3;
G eine Gruppe, an der unter den Bedingungen der fotografischen Entwicklung eine Abspaltung von $R^1$ erfolgen kann;
$R^1$ einen Rest einer diffusionsfähigen fotografisch wirksamen Verbindung;
X ein Sauerstoffatom, ein Schwefelatom, eine gegebenenfalls substituierte Iminogruppe;
$R^2$ H oder eine im alkalischen Milieu abspaltbare Gruppe;
E eine zur Aufnahme von Elektronen befähigte Gruppe;

wobei gilt, daß die Verbindung I mindestens einen diffusionsfest machenden Rest aufweist.

9. Verbindung nach Anspruch 8, worin in Formel I bedeuten:

$R^0$ die Atome zur Vervollständigung eines 5- oder 6gliedrigen aromatischen oder heteroaromatischen Ringes, an den weitere Ringe ankondensiert sein können;
W ein Halogenatom oder eine Cyan-, Nitro-, Nitroso-, Trifluormethyl-, quaternäre Ammonium- oder Acylgruppe;
m ganze Zahl von 1 bis 3;
$R^2$ eine Acylgruppe;
X ein Sauerstoffatom, Schwefelatom oder die Gruppe $-NR^3-$;
E eine der folgenden Gruppen:

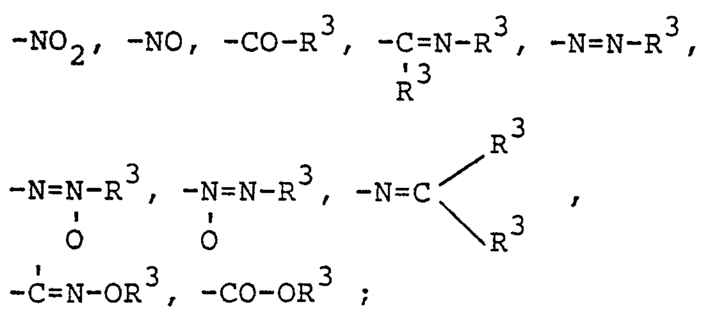

$R^3$ Wasserstoff, Alkyl, Aryl, eine heterocyclische Gruppe oder Aralkyl.

10. Verbindung der Formel

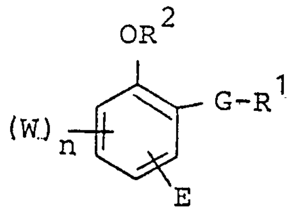

worin bedeuten

$G-R^1$ $-CR^{11}R^{12}-Z^1-A$ oder $-NR^{12}-CO-Z^2-A$
$R^{11}$ einen Alkylrest mit bis zu 18 C-Atomen
$R^{12}$ Wasserstoff oder einen Alkylrest mit bis zu 18 C-Atomen
$Z^1$ $-SO_2-$
$Z^2$ $-O-$
A den Rest eines diffundierenden Farbstoffes
$R^2$ einen von einer Carbonsäure oder einem Kohlensäurehalbester abgeleiteten Acylrest
E eine Nitrogruppe in o- oder p-Stellung zu $-OR^2$
W eine Alkylsulfonylgruppe in o- oder p-Stellung zu E
n 1 oder 2.

**Claims**

1. Photographic recording material having at least one light-sensitive silver halide emulsion layer and a non-diffusing compound containing a photographically active group which can be split off, which compound is in effective contact with said silver halide emulsion layer, characterised in that the compound corresponds to the following formula I:

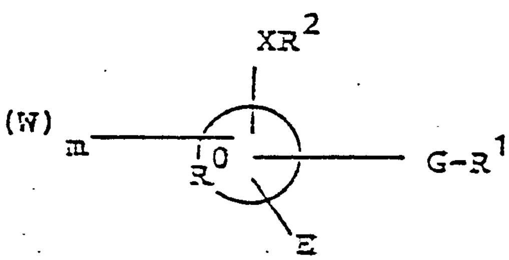

wherein

the substituents W, $XR^2$, $G-R^1$ and E may be arranged in any positions in relation to each other and

wherein

$R^0$ denotes the atoms required to complete a ring system containing at least one aromatic or heteroaromatic ring;
W denotes a group which reduces the electron density in the substituent E;
m denotes an integer of from 1 to 3;
G denotes a group from which $R^1$ can be split off under the conditions of photographic development;
$R^1$ denotes the residue of a diffusible photographically active compound;
X denotes an oxygen atom, a sulphur atom or an optionally substituted imino group;
$R^2$ denotes H or a group which can be split off in an alkaline medium;
E denotes a group capable of receiving electrons;

and compound I contains at least one radical which confers diffusion resistance.

2. Photographic material according to Claim 1, wherein in formula I

$R^0$ denotes the atoms required to complete a 5-membered or 6-membered aromatic or heteroaromatic ring, on which other rings may be condensed;
W denotes a halogen atom or a cyano, nitro, nitroso, trifluoromethyl, quaternary ammonium or acyl group;

m denotes an integer of from 1 to 3;
$R^2$ denotes an acyl group;
X denotes an oxygen atom, sulphur atom or the group $-NR^3-$;
E denotes one of the following groups:

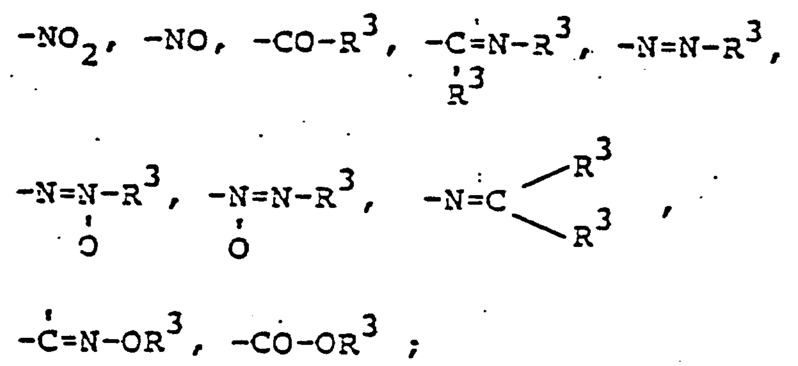

$R^3$ denotes hydrogen, alkyl, aryl, a heterocyclic group or aralkyl.

3. Photographic material according to Claim 1, wherein in Formula I

$R^0$ denotes the atoms required to complete a benzene ring,
W denotes a halogen atom, an alkylsulphonyl group or a nitro group,
m denotes an integer of from 1 to 3,
X denotes an oxygen atom,
$R^2$ denotes an acyl group, and
E denotes a nitro group.

4. Photographic material according to Claim 1, characterised in that the photographically active residue is the residue of a dye or of a dye precursor.

5. Photographic material according to Claim 1, characterised in that the silver halide emulsion layer contains a negatively functioning silver halide emulsion.

6. Material according to Claim 1, characterised in that it contains an electron donor compound or electron donor precursor compound in effective contact with the compound of formula I.

7. Photographic material according to Claim 1, characterised in that it is built up as an integral instant colour image unit and at least comprises, in the following order:

a) a light-sensitive element containing at least one negatively functioning silver halide emulsion layer and in association with said silver halide emulsion layer a combination of a non-diffusing colour-providing compound of the formula I, in which $R^1$ denotes the residue of a diffusible dye or dye precursor product, and an electron donor compound or electron donor precursor compound;
b) an alkali-permeable, light-reflecting opaque layer, and
c) an image-receiving layer for receiving the dye or dye precursor product released as a result of the splitting of the compound of formula I.

8. Compound of the general formula I

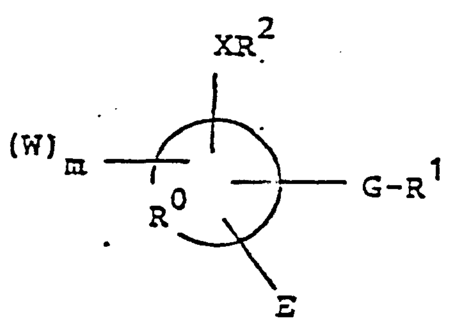

wherein

the substituents W, $XR^2$, $G-R^1$ and E may be arranged in any positions in relation to each other and

wherein

$R^0$ denotes the atoms required to complete a ring system containing at least one aromatic or heteroaromatic ring;
W denotes a group which reduces the electron density in the substituent E;
m denotes an integer of from 1 to 3;
G denotes a group from which $R^1$ can be split off under the conditions of photographic development;
$R^1$ denotes the residue of a diffusible photographically active compound;
X denotes an oxygen atom, a sulphur atom or an optionally substituted imino group;
$R^2$ denotes H or a group which can be split off in an alkaline medium;
E denotes a group capable of receiving electrons;

and compound I contains at least one radical which confers diffusion resistance.

9. Compound according to Claim 8, wherein in Formula I:

$R^0$ denotes the atoms required to complete a 5-membered or 6-membered aromatic or heteroaromatic ring, on which other rings may be condensed;
W denotes a halogen atom or a cyano, nitro, nitroso, trifluoromethyl, quaternary ammonium or acyl group;
m denotes an integer of from 1 to 3;
$R^2$ denotes an acyl group;
X denotes an oxygen atom, sulphur atom or the group $-NR^3-$;
E denotes one of the following groups:

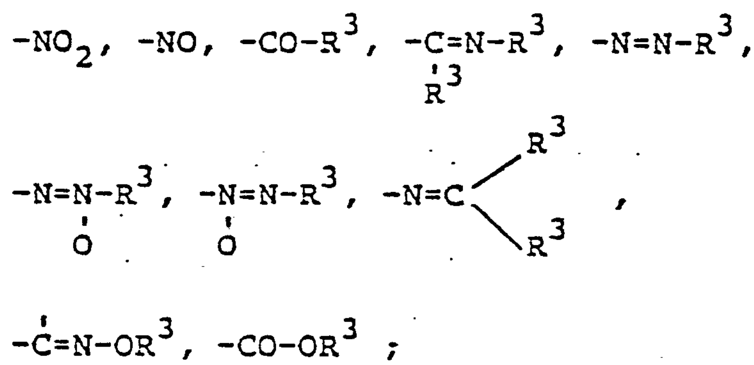

$R^3$ denotes hydrogen, alkyl, aryl, a heterocyclic group or aralkyl.

10. Compound of the formula

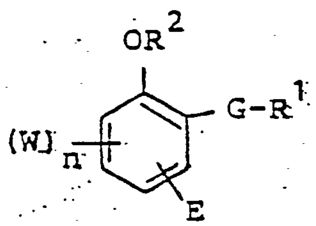

wherein

$G-R^1$ denotes $-CR^{11}R^{12}-Z^1-A$ or $-NR^{12}-CO-Z^2-A$,
$R^{11}$ denotes an alkyl radical with up to 18 C atoms,
$R^{12}$ denotes hydrogen or an alkyl radical with up to 18 C atoms,
$Z^1$ denotes $-SO_2-$,
$Z^2$ denotes $-O-$,
A denotes the residue of a diffusing dye,
$R^2$ denotes an acyl group derived from a carboxylic acid or a carbonic acid half-ester,
E denotes a nitro group in the o-position or p-position to $-OR^2$,
W denotes an alkylsulphonyl group in the o-position or p-position to E and
n denotes 1 or 2.

**Revendications**

1. Matériau photographique d'enregistrement comportant au moins une couche d'émulsion d'halogénure d'argent sensible à la lumière et un composé non diffusible se trouvant en contact efficace avec celle-ci, comportant un reste photographiquement actif éliminable, caractérisé en ce que le composé répond à la formule I suivante:

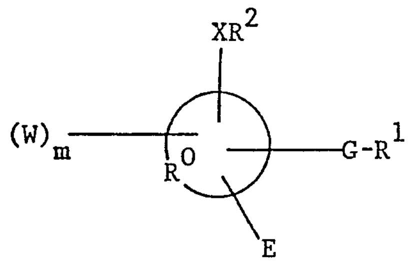

dans laquelle les substituants W, $XR^2$, $G-R^1$ et E peuvent se trouver dans n'importe quelle position les uns par rapport aux autres et dans laquelle:

- $R^0$ représente un reste pour compléter un système cyclique ayant au moins un noyau aromatique ou hétéroaromatique;
- W représente un groupe qui diminue la densité électronique dans le substituant E;
- m représente un nombre entier de 1 à 3;
- G représente un groupe sur lequel il peut y avoir élimination de $R^1$ dans les conditions du développement photographique;
- $R^1$ représente un reste d'un composé photographiquement actif diffusible;
- X représente un atome d'oxygène, un atome de soufre, un groupe imino éventuellement substitué;
- $R^2$ représente H ou un groupe éliminable en milieu alcalin;
- E représente un groupe accepteur d'électrons;

le composé I présentant au moins un reste conférant la résistance à la diffusion.

2. Matériau photographique selon la revendication 1, caractérisé en ce que, dans la formule I:

- $R^0$ représente les atomes nécessaires pour compléter un noyau aromatique ou hétéroaromatique à 5 ou 6 chaînons, sur lequel peuvent être condensés d'autres noyaux;
- W représente un atome d'halogène ou un groupe cyano, nitro, nitroso, trifluorométhyle, ammonium quaternaire ou acyle;
- m représente un nombre entier de 1 à 3;
- $R^2$ représente un groupe acyle;
- X représente un atome d'oxygène, un atome de soufre ou un groupe $-NR^3-$;
- E représente l'un des groupes suivants

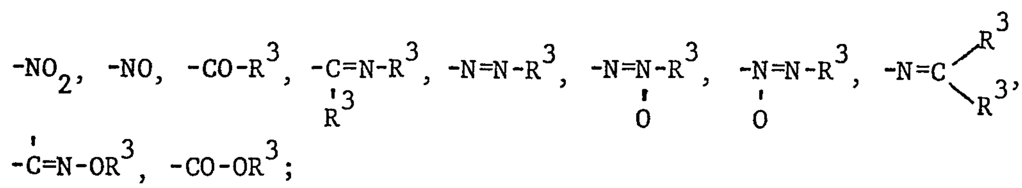

- $R^3$ représente l'hydrogène ou un groupe alkyle, aryle, un groupe hétérocyclique ou arylalkyle.

3. Matériau photographique selon la revendication 1, caractérisé en ce que, dans la formule I:

- $R^0$ représente les atomes pour compléter un noyau benzénique;
- W représente un atome d'halogène, un groupe alkylsulfonyle ou un groupe nitro;
- m représente un nombre entier de 1 à 3;
- X représente un atome d'oxygène;
- $R^2$ représente un groupe acyle;
- E représente un groupe nitro.

4. Matériau photographique selon la revendication 1, caractérisé en ce que le reste photographiquement actif est le reste d'un colorant ou d'un précurseur de colorant.

5. Matériau photographique selon la revendication 1, caractérisé en ce que la couche d'émulsion d'halogénure d'argent contient une émulsion d'halogénure d'argent fonctionnant en négatif.

6. Matériau photographique selon la revendication 1, caractérisé en ce qu'il contient un composé donneur d'électrons ou un précurseur de donneur d'électrons en contact efficace avec le composé de formule I.

7. Matériau photographique selon la revendication 1, caractérisé en ce qu'il est constitué sous forme d'une unité intégrale d'image couleur instantanée et comporte, dans l'ordre suivant, au moins:

a) un élément photosensible comportant au moins une couche d'émulsion d'halogénure d'argent fonctionnant en négatif et, associée à celle-ci, une combinaison d'un composé chromogène non diffusible de formule I, dans laquelle $R^1$ représente le reste d'un colorant ou précurseur de colorant diffusible et d'un composé donneur d'électrons ou précurseur de donneur d'électrons;
b) une couche opaque réfléchissant la lumière, perméable aux alcalis, et
c) une couche réceptrice d'image pour la fixation du colorant ou produit intermédiaire de colorant libéré lors de la dissociation du composé de formule I.

8. Composé de formule générale I

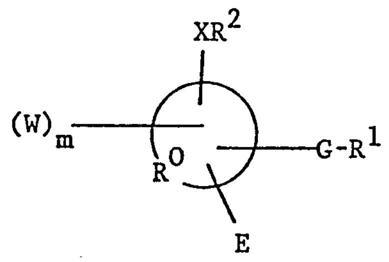

dans laquelle les substituants W, $XR^2$, $G-R^1$ et E peuvent se trouver dans n'importe quelle position les uns par rapport aux autres et dans laquelle:

$R^0$ représente un reste pour compléter un système cyclique ayant au moins un noyau aromatique ou hétéroaromatique;
W représente un groupe qui diminue la densité électronique dans le substituant E;
m représente un nombre entier de 1 à 3;
G représente un groupe sur lequel il peut y avoir élimination de $R^1$ dans les conditions du développement photographique;
$R^1$ représente un reste d'un composé photographiquement actif diffusible;
X représente un atome d'oxygène, un atome de soufre, un groupe imino éventuellement substitué;
$R^2$ représente H ou un groupe éliminable en milieu alcalin;
E représente un groupe accepteur d'électrons;

le composé I comportant au moins un reste conférant la résistance à la diffusion.

9. Composé selon la revendication 8, caractérisé en ce que, dans la formule I:

$R^0$ représente les atomes pour compléter un noyan aromatique ou hétéroaromatique à 5 ou 6 chaînons auquel d'autres noyaux peuvent être condensés;
W représente un atome d'halogène ou un groupe cyano, nitro, nitroso, trifluorométhyle, ammonium quaternaire ou acyle;
m représente un nombre entier de 1 à 3;
$R^2$ représente un groupe acyle;
X représente un atome d'oxygène, un atome de soufre ou le groupe $-NR^3-$;
E représente l'un des groupes suivants:

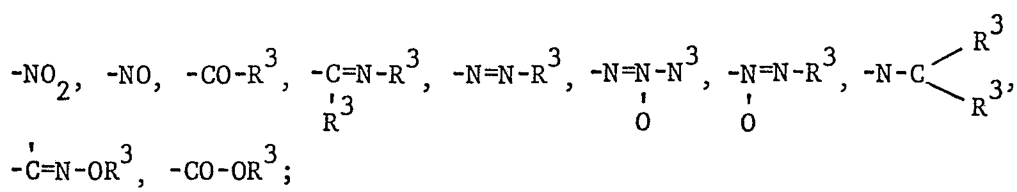

$R^3$ représente l'hydrogène ou un groupe alkyle, aryle, hétérocyclique ou arylalkyle.

10. Composé de formule

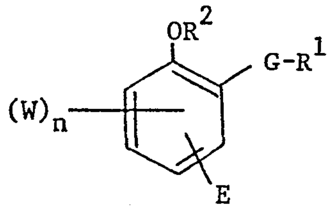

dans laquelle

- $G-R^1$ représente le groupe $-CR^{11}R^{12}-Z^1-A$ ou $-NR^{12}-CO-Z^2-A$;
- $R^{11}$ représente un reste alkyle jusqu'en $C_{18}$;
- $R^{12}$ représente l'hydrogène ou un groupe alkyle jusqu'en $C_{18}$;
- $Z^1$ représente $-SO_2-$;
- $Z^2$ représente $-O-$;
- A représente le reste d'un colorant diffusible;
- $R^2$ représente un reste acyle dérivé d'un acide carboxylique ou d'un semiester carbonique;
- E représente un groupe nitro en position o ou p par rapport à $-OR^2$;
- W représente un groupe alkylsulfonyle en position o ou p par rapport à E;
- n représente 1 ou 2.